(19) Europäisches Patentamt
European Patent Office
Office européen des brevets

(11) **EP 3 029 086 B1**

(12) **EUROPEAN PATENT SPECIFICATION**

(45) Date of publication and mention
of the grant of the patent:
**06.09.2023 Bulletin 2023/36**

(21) Application number: **14831512.0**

(22) Date of filing: **30.07.2014**

(51) International Patent Classification (IPC):
**C08G 64/30** *(2006.01)*    **C08G 18/44** *(2006.01)*
**C09D 175/04** *(2006.01)*

(52) Cooperative Patent Classification (CPC):
(C-Sets available)
**C08G 18/44; C08G 18/10; C08G 18/664;
C08G 18/7671; C08G 64/305; C09D 175/06**

(Cont.)

(86) International application number:
**PCT/JP2014/070060**

(87) International publication number:
**WO 2015/016261 (05.02.2015 Gazette 2015/05)**

(54) **METHOD FOR PRODUCING POLYCARBONATE DIOL, POLYCARBONATE DIOL, METHOD FOR PRODUCING POLYURETHANE AND POLYURETHANE**

VERFAHREN ZUR HERSTELLUNG VON POLYCARBONATDIOL, POLYCARBONATDIOL, VERFAHREN ZUR HERSTELLUNG VON POLYURETHAN UND POLYURETHAN

PROCÉDÉ DE PRODUCTION D'UN POLYCARBONATEDIOL, POLYCARBONATEDIOL, PROCÉDÉ DE PRODUCTION DE POLYURÉTHANNE ET POLYURÉTHANNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.07.2013 JP 2013159231**

(43) Date of publication of application:
**08.06.2016 Bulletin 2016/23**

(73) Proprietor: **Mitsubishi Chemical Corporation
Tokyo 100-8251 (JP)**

(72) Inventors:
• **NAKAGAWA, Yoko**
**Yokkaichi-shi**
**Mie 510-8530 (JP)**
• **KUSANO, Kazunao**
**Kitakyushu-shi**
**Fukuoka 806-0004 (JP)**
• **KANAMORI, Yoshikazu**
**Yokohama-shi**
**Kanagawa 227-8502 (JP)**
• **WAKABAYASHI, Kazuki**
**Kitakyushu-shi**
**Fukuoka 806-0004 (JP)**
• **YAMANAKA, Takayuki**
**Yokkaichi-shi**
**Mie 510-8530 (JP)**
• **IZAWA, Yusuke**
**Yokkaichi-shi**
**Mie 510-8530 (JP)**

(74) Representative: **Vossius & Partner
Patentanwälte Rechtsanwälte mbB
Siebertstrasse 3
81675 München (DE)**

(56) References cited:
**EP-A1- 2 060 595        WO-A2-2005/003202
JP-A- H06 329 752        JP-A- 2000 001 646
JP-A- 2000 319 350        JP-A- 2005 048 141
JP-A- 2007 161 905        JP-A- 2012 072 350**

(52) Cooperative Patent Classification (CPC): (Cont.)

C-Sets
**C08G 18/10, C08G 18/7671**

## Description

Technical Field

The present invention relates to a method for producing a polycarbonate diol, more specifically, a method of performing a transesterification reaction of an aliphatic dihydroxy compound with a carbonate compound in the presence of sugar and/or a derivative thereof to produce a polycarbonate diol capable of optimizing the reaction rate with an isocyanate compound at the time of production of a polyurethane and enabling the obtained polyurethane to be uncolored and improved in the tensile strength, elastic recovery ratio, etc., and a polycarbonate diol produced by this method.

The present invention also relates to a method for producing a polyurethane by using the polycarbonate diol above, and a polyurethane produced by this method.

Background Art

Conventionally, the main soft segment of a polyurethane resin produced on an industrial scale, i.e., the polyol, is classified into a polyether type typified by polypropylene glycol and polytetramethylene glycol, a polyester polyol type typified by dicarboxylic acid-based polyester, a polylactone type typified by polycaprolactone, and a polycarbonate type obtained by reacting a carbonate source with a diol (Non-Patent Document 1).

Of these, a polycarbonate type, i.e., a polyurethane obtained by reacting a polycarbonate diol with an isocyanate compound, is characterized by being very excellent in the heat resistance, hydrolysis resistance, weather resistance, etc. and is applicable to wide uses.

In addition, as the technique for producing a polyurethane containing a polycarbonate diol component, various techniques using a biomass resource-derived raw material has been recently proposed. For example, Patent Document 1 describes a technique of producing a polyurethane by using a polycarbonate diol produced with use of a biomass resource-derived diol. However, in Patent Document 1, it is not disclosed that a diol as a production raw material of the polycarbonate diol or a polycarbonate diol as a production raw material of the polyurethane contains sugar and/or a derivative thereof.

More specifically, the biomass resource-derived diol described in Patent Document 1 is obtained, for example, by fermenting sugar, but the fermentation liquid obtained by fermentation passes through a multistage purification step such as extraction, crystallization and distillation so as to remove polymers and other impurities, as a result, high-boiling-point sugar, etc. are separated and removed, resulting in a diol not containing these in general.

Patent Document 2 describes a technique of producing a polyurethane prepolymer by reacting a polyhydric alcohol containing molasses or a sugar compound with a polyisocyanate, and it is stated that a film-forming material with excellent biodegradability and good physical durability is obtained from the produced polyurethane prepolymer. However, production of a polycarbonate diol and production of a polyurethane using the produced polycarbonate diol are not described, and furthermore, a feature of containing sugar in a polyurethane raw material used at the time of production is not described either.

Patent Document 3 describes a production method of a soft polyurethane foam but not a thermoplastic polyurethane, where a polyol mixture containing 0.5% or more of a low molecular polyol obtained by an addition reaction of either one or both of propylene oxide and ethylene oxide with a sugar alcohol having 5 or more OH groups is reacted with a polyisocyanate having an average number of NCO groups of 2.1 to 2.5 and thereby, a soft polyurethane foam having high water resistance is obtained.

The method described in Patent Document 3 is a production method of a soft polyurethane foam and differs in the reaction conditions from the production method of a thermoplastic polyurethane, and the reaction is different from the reaction for producing a thermoplastic polyurethane. In the production of a soft polyurethane foam of Patent Document 3, the strength needs to be ensured by greatly increasing the crosslinking degree and for this purpose, the use amount of a polyfunctional sugar alcohol derivative as a low molecular polyol is large and must be 0.5% (5,000 ppm by weight) or more.

Patent Document 4 sets forth an example where in a reaction for obtaining a polycarbonate diol containing 1,4-butanediol as a raw material diol, pentaerythritol tetrakis[3-(3,5-di-tert-butyl-4-hydroxyphenyl)propionate] is added as a byproduct tetrahydrofuran inhibitor in an amount of 125 ppm relative to the raw material diol, but is silent on the feature that sugar or a derivative thereof is preferred.

Background Art Document

Patent Document

Patent Document 1: JP-A-2011-225863
Patent Document 2: JP-A-2000-1646
Patent Document 3: JP-A-2009-191223
Patent Document 4: JP-A-2005-48141

EP 2 060 595 A1 describes a polycarbonate having a plant-derived component and a method for its production. EP 2 559 718 A1 describes a polycarbonate diol and its production.

Non-Patent Document

Non-Patent Document 1: "Polyurethane no Kiso to Oyo (Basis and Application of Polyurethane)", page 96 et seq., supervised by Katsuji Matsunaga, CMC Shuppan, issued on November 2006

Summary of Invention

Problem that Invention is to Solve

At the time of production of a polyurethane containing a polycarbonate diol component, in view of enhancing the productivity and reducing the use amount of a relatively expensive isocyanate compound in raw materials, it is industrially a very important to-be-improved item to increase the reaction rate of a polycarbonate diol with an isocyanate compound and thereby obtain a polyurethane having a molecular weight within a given range in a short time. In addition, as to the application of polyurethane, it is also an important item to increase the mechanical properties such as tensile strength and elastic recovery in the aspect of enhancing the durability of a product and expanding the application. Furthermore, for enhancing the design property when processing the polyurethane into various products, it is also important for the polyurethane to be uncolored.

An object of the present invention is to provide a production method of a polycarbonate diol, ensuring that a molecular weight in a predetermined range most suitable for the enhancement of productivity can be obtained by optimizing the reaction rate at the time of producing a polyurethane by a reaction of the polycarbonate diol with an isocyanate compound and the polyurethane obtained can be uncolored and improved in the tensile strength, elastic recovery ratio, etc., and a production method of a polyurethane using the polycarbonate diol.

Means for Solving Problem

As a result of many intensive studies to attain the above-described object, the present inventors have found that at the time of producing a polycarbonate diol by a transesterification reaction of a dihydroxy compound and a carbonate compound, when the polycarbonate diol is produced by allowing sugar and/or a derivative thereof to be present in the reaction system in a predetermined amount relative to the raw material dihydroxy compound, a polycarbonate diol of good quality can be obtained and when a polyurethane is produced using this polycarbonate diol and an isocyanate compound, not only the reaction rate can be optimized but also the polyurethane obtained can be uncolored and excellent in the tensile strength, elastic recovery ratio, etc.

The present invention has been accomplished based on this finding, and it is set out in the appended set of claims.

Effects of Invention

According to the present invention, a polyurethane having a molecular weight in a predetermined range most suitable for the enhancement of productivity can be efficiently produced by optimizing the reaction rate of a polycarbonate diol and an isocyanate compound. In addition, the obtained polyurethane is uncolored and excellent in the tensile strength, elastic recovery ratio, etc. and therefore, is useful for various applications.

Mode for Carrying Out Invention

The embodiments of the present invention are described in detail below; the present invention is not limited to the following embodiments but is only limited by the appended claims.

The production method of a polycarbonate diol of the present invention is a production method of a polycarbonate diol, including a step of polymerizing an aliphatic dihydroxy compound and a carbonate compound by a transesterification reaction in the presence of sugar and/or a derivative thereof to obtain a polycarbonate diol and is characterized in that the content of the sugar and/or derivative thereof is from 0.1 to 80 ppm by weight relative to the total of the sugar and/or derivative thereof and the dihydroxy compound.

The production method of a polyurethane of the present invention is characterized by including a step of reacting the polycarbonate diol of the present invention obtained by the above-described production method of a polycarbonate diol with an isocyanate compound to obtain a polyurethane.

At the time of a reaction of the polycarbonate diol of the present invention with an isocyanate compound, a chain extender may be further caused to be present.

Unless specifically limited, the polyurethane as used in the present invention indicates a thermoplastic polyurethane or a polyurethaneurea, and these two kinds of resins are conventionally known to exhibit substantially the same physical properties. On the other hand, as for the difference in structural characteristics, while the polyurethane is produced using a short-chain polyol as the chain extender, the polyurethaneurea is produced using a polyamine compound as the chain extender.

[Sugar and/or Derivative Thereof]

In the production method of a polycarbonate diol of the present invention and the production method of a polyurethane of the present invention, the sugar caused to be present in the transesterification reaction system of an aliphatic dihydroxy compound and a carbonate compound (hereinafter, sometimes simply referred to as "transesterification reaction system") includes, for example, a hexose such as glucose, mannose, galactose, fructose, sorbose and tagatose; a pentose such as arabinose, xylose, ribose, xylulose and ribulose; and a disaccharide or a polysaccharide, such as sucrose, raffinose and starch. Among these, glucose, sucrose and xylose are preferred. One of the reasons why such sugars are preferred is that they efficiently react with an isocyanate compound and become a crosslinking core.

In addition, in the production method of a polycarbonate diol of the present invention and the production method of a polyurethane of the present invention, the sugar derivative is selected from deoxyribose, fucose, fuculose, rhamnose, quinovose, paratose , sorbitol, mannitol, xylitol, gluconolactone, glucronic acid, levoglucosan, 4-deoxy-3-hexosulose, hydroxymethylfurfural, furfural, 2-hydroxy-3-oxobutanal, erythrose, acetol, glycoaldehyde, 3-methylcyclopentane-1,2-dione, 4-hydoxy-2-pentenoic acid lactone, levulinic acid, 2-acetylfuran and hydroquinone.

Among these, from the standpoint of ease of the reaction rate control gluconolactone as dehydrogenated sugar, hydroxymethylfurfural as a trimolecular dehydration product, and erythrose as a retro-aldol product of glucose are preferred. Above all, those having two or more hydroxyl groups, such as gluconolactone and erythrose, are preferred.

In the present invention, one member or two or more members of the sugars above may be present in the transesterification reaction system, one member or two or more members of the sugar derivatives may be present in the transesterification reaction system, or one member or two or more members of the sugars and one member or two or more members of the sugar derivatives may be present in the transesterification reaction system.

In the production method of a polycarbonate diol of the present invention, the sugar and/or derivative thereof may be added separately from the dihydroxy compound and the carbonate compound at the time of production of a polycarbonate diol or may be present in the transesterification reaction system in the state of being contained in the dihydroxy compound or carbonate compound, but when part of the sugar and/or derivative thereof of the present invention becomes a constituent component of a polycarbonate diol, the sugar and/or derivative thereof are less likely to be removed in the subsequent purification step, etc. and from this viewpoint, the sugar and/or derivative thereof are preferably present in the transesterification reaction system in the state of being contained in the dihydroxy compound. For this reason, in the present invention, it is preferable to include, before the step of obtaining a polycarbonate diol by a transesterification reaction, a step of adjusting the concentration of the sugar and/or derivative thereof in the dihydroxy compound to a range of 0.1 to 80 ppm by weight, more specifically, a step of adjusting the content of the sugar and/or derivative thereof in the dihydroxy compound containing sugar and/or a derivative thereof to a range of 0.1 to 80 ppm by weight relative to the total of the sugar and/or derivative thereof and the dihydroxy compound, and through this step, cause the above amount of the sugar and/or derivative thereof to be present in the transesterification reaction system.

The polycarbonate diol obtained by the production method of a polycarbonate diol of the present invention may be either one or both of a polycarbonate diol in which sugar and/or a derivative thereof is contained as a constituent component of the polycarbonate diol due to participation of sugar and/or a derivative thereof in the transesterification reaction; and a polycarbonate diol in which unreacted sugar and/or derivative thereof not contained as a constituent component are present due to no participation of sugar and/or a derivative thereof in the transesterification reaction. For example, at the time of polymerizing a dihydroxy compound and a carbonate compound by a transesterification reaction according to the later-described method to produce a polycarbonate diol, the polycarbonate diol containing sugar and/or a derivative thereof obtained by using the raw material dihydroxy compound and/or carbonate compound, preferably by using, as the dihydroxy compound, a dihydroxy compound containing sugar and/or a derivative thereof, indicates the polycarbonate diols above.

In the present invention, the amount of sugar and/or a derivative thereof present in the transesterification reaction system at the time of production of a polycarbonate diol is from 0.1 to 80 ppm by weight relative to the total of the sugar and/or derivative thereof and the dihydroxy compound in the transesterification reaction system. If the amount of the sugar and/or derivative thereof is less than 0.1 ppm by weight, when performing a urethanation reaction by using the obtained polycarbonate diol, the effect of increasing the reaction rate by the presence of sugar and/or a derivative thereof and the effect of enhancing the physical properties such as tensile strength and elastic recovery ratio of the obtained polyurethane cannot be sufficiently obtained, whereas if the amount exceeds 80 ppm by weight, the polymerization of polycarbonate diol is inhibited, leading to a tendency that the reaction rate at the time of polycarbonate diol is reduced and the polymer is yellow-colored. Furthermore, the reaction rate of a polyurethane using the polycarbonate diol is too much increased to exceed the molecular weight or viscosity most suitable for a processing step and deteriorate the decorative property, and at the same time, there is a tendency that the polyurethane is yellow-colored and the decorative property of a product using it is impaired. The cause of inhibiting the polymerization of polycarbonate diol is presumed to be the deterioration of a catalyst used at the time of production of a polycarbonate diol, which is attributable to sugar and/or a derivative thereof. In addition, the cause of increase in the reaction rate of a polyurethane using the polycarbonate diol above is presumed to be excessive formation of crosslinked structures due to sugar and/or a derivative thereof. The probable factor regarding the formation of a crosslinked structure is as described later.

As for the abundance (content) of sugar and/or a derivative thereof, the lower limit is preferably 0.2 ppm by weight, more preferably 0.3 ppm by weight, still more preferably 0.4 ppm by weight, yet still more preferably 0.5 ppm by weight, and most preferably 0.6 ppm by weight, relative to the total of the sugar and/or derivative thereof and the dihydroxy compound in the transesterification reaction system. The upper limit is preferably 70 ppm by weight, more preferably 60 ppm by weight, still more preferably 50 ppm by weight, yet still more preferably 40 ppm by weight, even yet still more preferably 30 ppm by weight, and most preferably 20 ppm by weight.

In the present invention, a polycarbonate diol containing sugar and/or a derivative, obtained by causing sugar and/or a derivative thereof to be present in the transesterification reaction system, is used as the raw material polycarbonate diol of a polyurethane, whereby the effect of increasing the urethane reaction rate and the effect of enhancing the tensile strength, elastic recovery ratio, etc. of the obtained polyurethane are produced. Although details of this mechanism of action is not clearly known, it is presumed that sugar and/or a derivative thereof has, in the molecule, a functional group participating in a urethane reaction, such as hydroxyl group, and when sugar and/or a derivative thereof is present, the crosslinking degree of a polyurethane obtained by a urethane reaction can be increased, as a result, the polymerization reaction for urethanation is promoted and at the same time, a crosslinked structure is introduced into the obtained polyurethane to enhance the physical properties such as tensile strength and elastic recovery ratio. The increase in the reaction rate as used herein indicates that a polyurethane having a higher molecular weight is obtained within the same time. On the other hand, in the transesterification reaction at the time of producing a polycarbonate diol, it is considered that since the reactivity of a hydroxyl group is lower than for a urethane reaction, only a primary hydroxyl group of sugar and/or a derivative thereof is reacted, while leaving a secondary hydroxyl group to remain unreacted, and the remaining secondary hydroxyl group reacts with an isocyanate compound during a urethanation reaction and contributes to introduction of a crosslinked structure.

Among others, sugar of tetra- or higher saccharide and/or a derivative thereof generally have, in the molecule, one primary hydroxyl group and two or more secondary hydroxyl groups. Therefore, in the production of a polycarbonate diol, it is considered that as long as the content of the sugar and/or derivative thereof is in a preferable range, the production of a polycarbonate diol is less affected by a change in the molecular weight, formation of a crosslinked structure, etc. and one primary hydroxyl group is introduced into a terminal of the polycarbonate diol. In the subsequent polyurethane reaction, it is considered that since two or more secondary hydroxyl groups remaining at a terminal, etc. of a polycarbonate diol participate in the reaction, a crosslinked structure is formed and the above-described effects are produced.

Furthermore, in the present invention, there is a tendency that as the content of sugar and/or a derivative thereof is increased up to a given amount, the reaction rate is slightly decreased and when the content reaches more than the given amount, the reaction rate exceeds the preferable range and becomes high. Although details of this mechanism of action is not clearly known, it is presumed that sugar and/or a derivative thereof interact with a urethane reaction catalyst by coordination, etc. and therefore, as the content of sugar and/or a derivative thereof is increased up to a given amount, the catalytic activity is reduced to decrease the reaction rate but when the content exceeds the given amount, the reduction in the catalytic activity hits the bottom and the concentration of sugar and/or a derivative thereof rises to strengthen the action as a crosslinking agent, allowing the action of raising the reaction rate to surpass the reduction in the catalytic activity.

[Production of Polycarbonate Diol]

The production method of the polycarbonate diol of the present invention suitably used as a production raw material of the polyurethane of the present invention is described below.

This polycarbonate diol is produced by polymerizing a dihydroxy compound and a carbonate compound by a transesterification reaction.

(1) Dihydroxy Compound

The dihydroxy compound for use in the present invention is an aliphatic dihydroxy compound, and one of these compounds may be used alone, or two or more thereof may be mixed and used. In view of ease of handling and balance of physical properties of the polycarbonate diol obtained, an aliphatic dihydroxy compound, i.e., a linear or branched-chain or alicyclic dihydroxy compound, is used. The lower limit value of the carbon number thereof is preferably 2, and the upper limit value is preferably 20, more preferably 15.

Specific examples of the aliphatic dihydroxy compound include an aliphatic dihydroxy compound having a branched chain, such as 1,2-butanediol, 1,3-butanediol, 2-methyl-1,3-propanediol, 2-methyl-1,4-butanediol, 2-ethyl-1,6-hexanediol, 2,4-diethyl-1,5-pentanediol, neopentyl glycol and 3-methyl-1,5-pentanediol; an aliphatic dihydroxy compound having no branched chain, such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,16-hexadecanediol, 1,18-octadecanediol and 1,20-eicosanediol; and a dihydroxy compound having a cyclic group in the molecule, such as 1,3-cyclohexanediol, 1,4-cyclohexanediol, 1,4-cyclohexanedimethanol, 4,4-dicyclohexyldimethylmethanediol, 2,2'-bis(4-hydroxycyclohexyl)propane, 1,4-dihydroxyethylcyclohexane, 4,4'-isopropylidenedicyclohexanol and 4,4'-isopropylidenebis(2,2'-hydroxyethoxycyclohexane).

Above all, an aliphatic dihydroxy compound having no branched chain is preferred, because the polyurethane produced using the obtained polycarbonate diol has good physical properties such as chemical resistance and heat resistance. Furthermore, from the standpoint that the physical properties, i.e., chemical resistance and heat resistance, of the polyurethane are improved, a dihydroxy compound having a small carbon number is preferred, and it is preferable to contain, for example, at least one member selected from the group consisting of 1,3-propanediol, 1,4-butanediol and 1,5-pentanediol. Among others, it is more preferable to contain either one of 1,3-propanediol and 1,4-butanediol.

The dihydroxy compound for use in the present invention is preferably a plant-derived compound, that is, a dihydroxy compound derived from biomass resources. Such a dihydroxy compound includes 1,3-propanediol, 1,4-butanediol, 1,5-propanediol, 1,6-hexanediol, 1,9-nonanediol, 1,10-decanediol, 1,11-undecanediol, 1,12-dodecanediol, 1,13-tridecanediol, 1,20-eicosanediol, etc.

Among these, 1,4-butanediol and 1,3-propanediol are preferred and, above all, a compound containing 1,4-butanediol as the main component, and 1,4-butanediol are more preferred.

In addition, the polycarbonate diol may be produced using, as raw materials, such a plant-derived dihydroxy compound and a petroleum-derived dihydroxy compound, or a plurality of plant-derived dihydroxy compounds. In particular, when a plurality of plant-derived dihydroxy compounds are used, the percentage of a plant-derived raw material can be advantageously increased. Among others, it is good to combine, out of the above-described plant-derived dihydroxy compounds, at least one kind of a short-chain dihydroxy compound having a carbon number of 3 to 5 and at least one kind of a long-chain dihydroxy compound having a carbon number of 9 to 20. Such a combination includes, for example, a combination of 1,4-butanediol and 1,10-decanediol. A polyurethane produced from a polycarbonate diol using these compounds as raw materials is excellent in the balance between low-temperature flexibility and chemical resistance.

The "as the main component" indicates that the ratio of the compound is, usually, preferably 50 mol% or more, more preferably 60 mol% or more, still more preferably 70 mol% or more, yet still more preferably 90 mol% or more, relative to all dihydroxy compounds.

When a dihydroxy compound having a methylene chain between hydroxyl groups and having an even carbon number is used as the raw material dihydroxy compound, the mechanical strength of the polyurethane produced using the obtained polycarbonate diol is increased, and when a dihydroxy compound having an odd carbon number or having a branched structure is used, the handling property of the obtained polycarbonate diol is enhanced.

In the present invention, as described above, a dihydroxy compound derived from biomass resources may be used as the dihydroxy compound. Specifically, the dihydroxy compound may be produced directly from a carbon source such as glucose by a fermentation method, or a dicarboxylic acid, a dicarboxylic anhydride or a cyclic ether, each obtained by a fermentation method, may be converted into a dihydroxy compound by a chemical reaction.

For example, in the case of 1,4-butanediol, the 1,4-butanediol may be produced by chemical synthesis from succinic acid, succinic anhydride, a succinic acid ester, maleic acid, maleic anhydride, a maleic acid ester, tetrahydrofuran, $\gamma$-butyrolactone, etc., each obtained by a fermentation method, the 1,4-butanediol may be produced directly by a fermentation method, or the 1,4-butanediol may be produced from 1,3-butadiene obtained by a fermentation method. Of these, a method of producing 1,4-butanediol directly by a fermentation method, and a method of hydrogenating succinic acid by a reduction catalyst to obtain 1,4-butanediol are efficient and preferred.

The reduction catalyst used at the time of hydrogenating succinic acid includes, for example, Pd, Ru, Re, Rh, Ni, Cu, Co, and compounds thereof. More specifically, the reduction catalyst includes Pd/Ag/Re, Ru/Ni/Co/ZnO, Cu/Zn oxide, Cu/Zn/Cr oxide, Ru/Re, Re/C, Ru/Sn, Ru/Pt/Sn, Pt/Re/alkali, Pt/Re, Pd/Co/Re, Cu/Si, Cu/Cr/Mn, ReO/CuO/ZnO, CuO/CrO, Pd/Re, Ni/Co, Pd/CuO/CrO$_3$, Ru phosphate, Ni/Co, Co/Ru/Mn, Cu/Pd/KOH, and Cu/Cr/Zn. Among these, Ru/Sn or Ru/Pt/Sn is preferred in view of catalytic activity.

Furthermore, a method of producing a dihydroxy compound from biomass resources by a combination of known organic chemical catalytic reactions may also be used, and, for example, in the case of utilizing pentose as the biomass resource, a dihydroxy compound such as butanediol can be easily produced by a combination of known dehydration reaction and catalytic reaction.

The dihydroxy compound derived from biomass resources sometimes contains, as an impurity, nitrogen atom derived from biomass resources or attributable to a fermentation treatment and a purification treatment including a neutralization step with an acid. In this case, specifically, nitrogen atom derived from amino acid, protein, ammonia, urea, or fermentation microorganism comes to be contained.

The upper limit of the content of nitrogen atom contained in the dihydroxy compound produced by a fermentation method is, usually, preferably 2,000 ppm, more preferably 1,000 ppm, still more preferably 100 ppm, and most preferably 50 ppm, in terms of the weight concentration relative to the dihydroxy compound. On the other hand, the lower limit is not particularly limited but is, usually, preferably 0.01 ppm, more preferably 0.05 ppm. In view of profitability of the purification step, the lower limit is still more preferably 0.1 ppm, yet still more preferably 1 ppm, even yet still more preferably 10 ppm.

When the content of nitrogen atom contained in the dihydroxy compound produced by a fermentation method is not more than the upper limit above, for example, retardation or acceleration of the reaction for polycarbonate diol or the urethane polymerization reaction using it, coloration, partial gelation, and reduction in the stability can be prevented. On the other hand, when the content is not less than the lower limit above, the purification step is prevented from becoming cumbersome, and this is economically advantageous. The nitrogen atom content is a value as measured by a known elemental analysis method.

In another embodiment, the upper limit of the content of nitrogen atom contained in the dihydroxy compound is, usually, preferably 2,000 ppm, more preferably 1,000 ppm, still more preferably 100 ppm, and most preferably 50 ppm, in terms of weight concentration relative to the sum total of production raw materials of the polycarbonate diol. On the other hand, the lower limit is not particularly limited but is, usually, preferably 0.01 ppm, more preferably 0.05 ppm, still more preferably 0.1 ppm.

In the case of using the dihydroxy compound produced by a fermentation method, the polycarbonate diol sometimes contains sulfur atom attributable to a purification treatment including a neutralization step with an acid. In this case, the impurity containing sulfur atom specifically includes, for example, sulfuric acid, sulfurous acid, and organic sulfonate.

The upper limit of the content of sulfur atom contained in the dihydroxy compound produced by a fermentation method is, usually, preferably 100 ppm, more preferably 20 ppm, still more preferably 10 ppm, yet still more preferably 5 ppm, and most preferably 0.5 ppm, in terms of the weight concentration relative to the dihydroxy compound. On the other hand, the lower limit is not particularly limited but is, usually, preferably 0.001 ppm, more preferably 0.01 ppm, still more preferably 0.05 ppm, yet still more preferably 0.1 ppm.

When the content of sulfur atom contained in the dihydroxy compound produced by a fermentation method is not more than the upper limit above, for example, retardation of the polymerization reaction, coloration of the obtained polycarbonate diol, partial gelation, and reduction in the stability can be prevented. On the other hand, when the content is not less than the lower limit above, the purification step is prevented from becoming cumbersome, and this is economically advantageous. The sulfur atom content is a value as measured by a known elemental analysis method.

In another embodiment, the upper limit of the content of sulfur atom contained in the dihydroxy compound and the carbonate compound is, usually, preferably 100 ppm, more preferably 20 ppm, still more preferably 10 ppm, yet still more preferably 5 ppm, and most preferably 0.5 ppm, in terms of the weight concentration relative to the sum total of production raw materials of the polycarbonate diol. On the other hand, the lower limit is not particularly limited but is, usually, preferably 0.001 ppm, more preferably 0.01 ppm, still more preferably 0.05 ppm, yet still more preferably 0.1 ppm,

In the present invention, in the case of using the biomass resource-derived dihydroxy compound as a polycarbonate diol raw material, the oxygen concentration or temperature in a tank storing the dihydroxy compound and being connected to the transesterification reaction system may be controlled so as to reduce the problem such as coloration of the polycarbonate diol or polyurethane, which is attributable to the above-described impurities.

Coloration of the impurity itself or an oxidation reaction of the dihydroxy compound promoted by impurities is suppressed by the control above and, for example, in the case of using 1,4-butanediol, a problem such as coloration of polycarbonate diol or polyurethane caused by an oxidation product of a dihydroxy compound such as 2-(4-hydroxybutyloxy)tetrahydrofuran can be prevented.

In order to store the raw material while controlling the oxygen concentration, a tank is usually used. However, the apparatus for storage is not particularly limited, and an apparatus other than a tank may also be used as long as it can control the oxygen concentration. The kind of the storage tank is specifically not limited, and, for example, a known metal-made tank, a metal-made tank in which a lining of glass, a resin, etc. is applied to the inner surface, and a glass-made or resin-made container are used. In view of strength, etc., a metal-made tank or a metal-made tank subjected to lining is used.

As the construction material of the metal-made tank, a known material is used, and specific examples thereof include a carbon steel, a ferrite-based stainless steel, a martensite-based stainless steel such as SUS410, an austenite-based stainless steels such as SUS310, SUS304 and SUS316, a clad steel, cast iron, copper, a copper alloy, aluminum, Inconel, Hastelloy, and titanium.

The lower limit of the oxygen concentration in the storage tank of the dihydroxy compound is not particularly limited but is, usually, preferably 0.00001 vol%, more preferably 0.0001 vol%, still more preferably 0.001 vol%, and most preferably 0.01 vol%, in terms of volume % relative to the total volume of the storage tank, and the upper limit is, usually, preferably 10 vol%, more preferably 5 vol%, still more preferably 1 vol%, and most preferably 0.1 vol%.

When the oxygen concentration in the storage tank of the dihydroxy compound is 0.00001 vol% or more, the control step is prevented from becoming cumbersome, and this is economically advantageous. In addition, when the oxygen concentration is 10 vol% or less, a problem such as coloration of polyurethane by an oxidation reaction product of the dihydroxy compound can be prevented from increasing.

The lower limit of the storage temperature in the storage tank of the dihydroxy compound is, usually, preferably 15°C, more preferably 30°C, still more preferably 50°C, and most preferably 100°C, and the upper limit is preferably 230°C, more preferably 200°C, still more preferably 180°C, and most preferably 160°C.

When the storage temperature in the storage tank of the dihydroxy compound is 15°C or more, a temperature rise at the time of production of a polycarbonate diol is prevented from taking time, and not only the production of a polycarbonate diol is economically advantageous but also it can be prevented that the dihydroxy compound is solidified depending on the kind. On the other hand, when the storage temperature is 230°C or less, gasification of the dihydroxy compound is suppressed, dispensing with the need for high pressure-resistant storage equipment, and this is not only economically advantageous but also can prevent deterioration of the dihydroxy compound.

The pressure in the storage tank of the dihydroxy compound is preferably a slight pressurization of dry nitrogen gas or dry air. If the pressure is too low or too high, the control equipment is complicated, and this is economically disadvantageous.

In the present invention, the upper limit of the content of an oxidation reaction product of the dihydroxy compound used for the production of a polycarbonate diol so as to obtain a polyurethane with a good hue is, usually, preferably 10,000 ppm, more preferably 5,000 ppm, still more preferably 3,000 ppm, and most preferably 2,000 ppm, in terms of the weight concentration in the dihydroxy compound. On the other hand, the lower limit is not particularly limited but is, usually preferably 1 ppm, and in view of profitability of the purification step, more preferably 10 ppm, still more preferably 100 ppm.

Incidentally, the dihydroxy compound derived from biomass resources is usually purified by distillation but in the present invention, in the case of producing the polycarbonate diol of the present invention by using a dihydroxy compound containing sugar and/or a derivative thereof, the biomass resource-derived dihydroxy compound in the state of containing fermentation liquid-derived sugar and/or a derivative thereof may also be used for the production of the polycarbonate diol.

In the case of producing the polycarbonate diol by using a dihydroxy compound containing sugar and/or a derivative thereof, the content of the sugar and/or derivative thereof in the raw material dihydroxy compound may be sufficient if it is an amount large enough to allow sugar and/or a derivative thereof to be present in the above-described abundance in the transesterification reaction system, but there may be used, for example, a dihydroxy compound in which the lower limit of the content of sugar and/or a derivative thereof is preferably 0.2 ppm by weight, more preferably 0.3 ppm by weight, still more preferably 0.4 ppm by weight, yet still more preferably 0.5 ppm by weight, and most preferably 0.6 ppm by weight and the upper limit is preferably 70 ppm by weight, more preferably 60 ppm by weight, still more preferably 50 ppm by weight, yet still more preferably 40 ppm by weight, even yet still more preferably 30 ppm by weight, and most preferably 20 ppm by weight. Here, the content of sugar and/or a derivative thereof is the content in the dihydroxy compound containing sugar and/or a derivative thereof, i.e., the content of sugar and/or a derivative thereof relative to the total of the sugar and/or derivative thereof and the dihydroxy compound.

The method for adjusting the content of sugar and/or a derivative thereof in the dihydroxy compound to the ratio above includes, for example, a method of adding sugar and/or a derivative thereof to a dihydroxy compound not containing sugar and/or a derivative thereof or having a small content of sugar and/or a derivative thereof, a method of appropriately purifying a dihydroxy compound containing an excess amount of sugar and/or a derivative thereof by distillation, etc. to reduce the content of sugar and/or a derivative thereof, and a method of adding a dihydroxy compound not containing sugar and/or a derivative thereof to a dihydroxy compound containing an excess amount of sugar and/or a derivative thereof to effect dilution.

(2) Carbonate Compound

The carbonate compound for use in the present invention is not limited as long as the effects of the present invention are not impaired, but the carbonate compound includes a dialkyl carbonate, a diaryl carbonate, and an alkylene carbonate. Among these, a diaryl carbonate is preferred in view of reactivity.

As for the carbonate compound that can be used for the production of the polycarbonate diol of the present invention, examples of the dialkyl carbonate include dimethyl carbonate, diethyl carbonate, dibutyl carbonate, dicyclohexyl carbonate, diisobutyl carbonate, ethyl-n-butyl carbonate, and ethyl isobutyl carbonate, with dimethyl carbonate and diethyl carbonate being preferred. Examples of the diaryl carbonate include diphenyl carbonate, ditolyl carbonate, bis(chlorophenyl) carbonate, and di-m-cresyl carbonate, with diphenyl carbonate being preferred. Examples of the alkylene carbonate include ethylene carbonate, trimethylene carbonate, tetramethylene carbonate, 1,2-propylene carbonate, 1,2-butylene carbonate, 1,3-butylene carbonate, 2,3-butylene carbonate, 1,2-pentylene carbonate, 1,3-pentylene carbonate, 1,4-pentylene carbonate, 1,5-pentylene carbonate, 2,3-pentylene carbonate, 2,4-pentylene carbonate, and neopentyl carbonate, with ethylene carbonate being preferred.

One of these compounds may be used alone, or two or more thereof may be used in combination.

Among those, a diaryl carbonate is preferred, because the reactivity is excellent and therefore, even with a dihydroxy compound having low reactivity, the reaction proceeds under mild conditions. Above all, diphenyl carbonate (hereinafter, sometimes simply referred to as "DPC") is easily and inexpensively available as an industrial raw material and is preferred.

(3) Use Ratio of Raw Material Monomers

The amount of the carbonate compound used is not particularly limited, but, in terms of the molar ratio per mol of all dihydroxy compounds used for a transesterification reaction, the lower limit is preferably 0.35, more preferably 0.50, still more preferably 0.60, and the upper limit is preferably 1.00, more preferably 0.98, still more preferably 0.97. If the amount of the carbonate compound used exceeds this upper limit, the percentage of a polycarbonate diol in which the terminal group is not a hydroxyl group may be increased, or the molecular weight may not fall in a predetermined range, and if the amount used is less than the lower limit above, the polymerization may not proceed until a predetermined molecular weight.

(4) Transesterification Catalyst

In the production method of a polycarbonate diol of the present invention, a transesterification catalyst (hereinafter, sometimes referred to as "catalyst") is used.

As the transesterification catalyst, a compound generally recognized to have a transesterification ability may be used without limitation.

Examples of the transesterification catalyst include a compound of a long-form periodic table Group 1 element (excluding hydrogen) such as lithium, sodium, potassium, rubidium and cesium; a compound of a long-form periodic table Group 2 element such as magnesium, calcium, strontium and barium; a compound of a long-form periodic table Group 4 element such as titanium and zirconium; a compound of a long-form periodic table Group 5 element such as hafnium; a compound of a long-form periodic table Group 9 element such as cobalt; a compound of a long-form periodic table Group 12 element such as zinc; a compound of a long-form periodic table Group 13 element such as aluminum; a compound of a long-form periodic table Group 14 element such as germanium, tin and lead; a compound of a long-form periodic table Group 15 element such as antimony and bismuth; and a compound of a lanthanide metal such as lanthanum, cerium, europium and ytterbium. Among these, from the standpoint of increasing the transesterification reaction rate, a compound of at least one element selected from the group consisting of a long-form periodic table Group 1 element (excluding hydrogen), a long-form periodic table Group 2 element, a long-form periodic table Group 4 element, a long-form periodic table Group 5 element, a long-form periodic table Group 9 element, a long-form periodic table Group 12 element, a long-form periodic table Group 13 element, and a long-form periodic table Group 14 element, is preferred; a compound of at least one element selected from the group consisting of a long-form periodic table Group 1 element (excluding hydrogen) and a long-form periodic table Group 2 element is preferred; and a compound of a long-form periodic table Group 2 element is still more preferred.

Among the compounds of a long-form periodic table Group 1 element (excluding hydrogen), compounds of lithium, potassium and sodium are preferred, compounds of lithium and sodium are more preferred, and a sodium compound is still more preferred. Among the compounds of a long-form periodic table Group 2 element, compounds of magnesium, calcium and barium are preferred, compounds of calcium and magnesium are more preferred, and a magnesium compound is still more preferred. These metal compounds are mainly used as a hydroxide, a salt, etc. In the case of use as a salt, examples of the salt include a halide salt such as chloride, bromide and iodide; a carboxylate salt such as acetate, formate and benzoate; an inorganic acid salt, such as carbonate, sulfate and nitrate; a sulfonate salt such as methanesulfonate, toluenesulfonate and trifluoromethanesulfonate; a phosphorus-containing salt such as phosphate, hydrogenphosphate and dihydrogenphosphate; and an acetylacetonate salt. The catalyst metal may also be used as an alkoxide such as methoxide or ethoxide.

Among these, an acetate, a nitrate, a sulfate, a carbonate, a phosphate, a hydroxide, a halide and an alkoxide of at least one metal selected from long-form periodic table Group 2 elements are preferably used; an acetate, a carbonate and a hydroxide of a long-form periodic table Group 2 element are more preferably used; an acetate, a carbonate and a hydroxide of magnesium or calcium are still more preferably used; an acetate of magnesium or calcium is yet still more preferably used; and magnesium acetate is most preferably used.

The amount of the catalyst used is usually from 1 to 200 $\mu$mol times per mol of all dihydroxy compounds used, and the lower limit is preferably 5 $\mu$mol times, more preferably 10 $\mu$mol times, still more preferably 15 $\mu$mol times, and the upper limit is preferably 100 $\mu$mol times, more preferably 70 $\mu$mol times, still more preferably 50 $\mu$mol times. If the amount of the catalyst used is too small, not only the polymerization reaction proceeds slowly due to lack of sufficient polymerization activity and a polycarbonate diol having a desired molecular weight can be hardly obtained, giving rise to reduction in the production efficiency, but also the time for which a raw material monomer remaining unreacted is present in the system during the polymerization reaction becomes long and therefore, the color tone may be deteriorated. In addition, the amount of the monomer distilled out together with a monohydroxy compound produced as a byproduct increases, as a result, the raw material consumption rate may be decreased or extra energy may be needed for the recovery thereof. Furthermore, in the case of a copolymer using a plurality of dihydroxy compounds, a change may be caused between the composition ratio of monomers used as the raw material and the composition ratio of constituent monomer units in the product polycarbonate diol. On the contrary, if the amount of the catalyst used is too large, the catalyst remains in an excessively large amount after the transesterification reaction, and the polycarbonate diol may be white-turbid or be easily colored by heating. In addition, at the time of producing a polyurethane by using the obtained polycarbonate diol, the remaining catalyst may inhibit the reaction or excessively promote the reaction.

Therefore, although not particularly limited, the amount of the catalyst remaining in the polycarbonate diol is, as the content in terms of catalyst metal, preferably 0.1 ppm or more, more preferably 0.5 ppm or more, still more preferably 1 ppm or more, yet still more preferably 2 ppm or more, and most preferably 3 ppm or more, and preferably 100 ppm or less, more preferably 50 ppm or less, still more preferably 30 ppm or less, yet still more preferably 20 ppm or less, and most preferably 10 ppm or less.

(5) Production of Polycarbonate Diol

The polycarbonate diol of the present invention can be produced by polymerizing one member or two or more members of the dihydroxy compounds described above and one member or two or more members of the carbonate compounds described above by a transesterification reaction in the presence of the above-described predetermined amount of sugar and/or a derivative thereof by preferably using the catalyst described above.

The method for charging the reaction raw materials is not particularly limited, and the method may be freely selected, e.g., may be a method of simultaneously charging the total amount of the dihydroxy compound, the carbonate compound and the catalyst and subjecting the compounds to a reaction; in the case where the carbonate compound is solid, a method of first charging the carbonate compound, followed by heating and melting, and then adding the dihydroxy compound and the catalyst; or, conversely, a method of first charging the dihydroxy compound, followed by melting, and putting the carbonate compound and the catalyst therein. The sugar and/or derivative thereof are also not particularly limited in the timing of charging but, as described above, is preferably charged in the state of being contained in the dihydroxy compound.

As for the reaction temperature at the time of transesterification reaction, an arbitrary temperature may be employed if it is a temperature at which a practical reaction rate is obtained. Although the temperature is not particularly limited, the lower limit is usually 70°C, preferably 100°C, more preferably 130°C. The upper limit of the reaction temperature is usually 250°C, preferably 200°C, more preferably 190°C, still more preferably 180°C, yet still more preferably 170°C. If the reaction temperature is less than the lower limit above, the transesterification reaction may not proceed at a practical rate. If the reaction temperature exceeds the upper limit above, the obtained polycarbonate diol may be colored, an ether structure may be produced, or there may arise a problem with the quality, for example, the turbidity becomes worse.

The reaction may be performed at atmospheric pressure, but the transesterification reaction is an equilibrium reaction and when a byproduct monohydroxy compound or dihydroxy compound is distilled out from the system, the reaction can be biased toward the product system. For this reason, usually, the reaction is preferably performed while distilling out a byproduct monohydroxy compound or dihydroxy compound by employing a reduced pressure condition in the latter half of the reaction process. It is also possible to continue the reaction while distilling out a byproduct monohydroxy compound or dihydroxy compound by gradually reducing the pressure in the middle of reaction. If the pressure is too much reduced in the initial stage of reaction, volatilization of a low-boiling-point unreacted monomer is encouraged, and a polycarbonate diol having a predetermined molecular weight may not be obtained or in the case of copolymerization, a polycarbonate diol having a predetermined copolymerization composition ratio may not be obtained.

On the other hand, when the reaction is performed by increasing the degree of pressure reduction in the final stage of reaction, a byproduct monohydroxy compound or dihydroxy compound such as phenols, a residual monomer such as carbonate compound, and a cyclic carbonate (cyclic oligomer), etc. having likelihood of becoming a cause of turbidity can be advantageously distilled out.

On this occasion, the reaction pressure at the time of reaction completion is not particularly limited, but the upper limit is 10 kPa, preferably 5 kPa, more preferably 1 kPa, in terms of absolute pressure. In order to effectively distill out these light boiling components, the reaction may also be performed while flowing a small amount of an inert gas such as nitrogen, argon and helium into the reaction system.

In the case of using a carbonate compound or a dihydroxy compound each having a low boiling point for the transesterification reaction, a method where the reaction is performed at near the boiling point of the carbonate compound or the dihydroxy compound in the initial stage of reaction, the temperature is gradually increased as the reaction proceeds, and the reaction is further allowed to proceed, may also be employed. In this case, unreacted carbonate compound or dihydroxy compound can be advantageously prevented from distilling out in the initial stage of reaction. Furthermore, in terms of preventing distillation of raw materials in the initial stage of reaction, it may also be possible to perform the transesterification reaction by distilling out a monohydroxy compound produced as a byproduct from the carbonate compound or a dihydroxy compound while refluxing a carbonate compound and a dihydroxy compound as raw materials by providing a reactor with a reflux tube. This case is advantageous in that the raw material monomers charged are not lost and the quantitative ratio of reagents can be adjusted exactly.

The polycondensation reaction may be performed in either a batch system or a continuous system, but from the standpoint of stability of the quality such as molecular weight of the product, a continuous system is excellent. The form of the apparatus used may be any of a tank, a tube and a column and, for example, a known polymerization tank equipped with various stirring blades may be used. The atmosphere during temperature rise of the apparatus is not particularly limited, but in view of quality of the product, the temperature rise is preferably performed in an inert gas such as nitrogen gas under atmospheric pressure or reduced pressure.

The time required for transesterification reaction so as to obtain the polycarbonate diol of the present invention greatly varies depending on the dihydroxy compound and carbonate compound used, with or without use of the catalyst, and the kind of the catalyst used and cannot be indiscriminately specified, but the reaction time required until reaching the predetermined molecular weight is usually 50 hours or less, preferably 20 hours or less, more preferably 10 hours or less.

(6) Catalyst Deactivator

As described above, in the case of using a catalyst at the time of transesterification reaction, the catalyst usually remains in the polycarbonate diol obtained, and due to the remaining catalyst, the polyurethane forming reaction may not be controlled. In order to suppress the effect of the remaining catalyst, after the transesterification reaction, the transesterification catalyst is preferably deactivated by adding a catalyst deactivator, for example, a phosphorus-based compound, in a substantially equimolar amount to the transesterification catalyst used. Furthermore, after the addition of a catalyst deactivator, the transesterification catalyst can be efficiently deactivated, as described later, by a heating treatment, etc.

The phosphorous-based compound used for the deactivation of transesterification catalyst includes, for example, an inorganic phosphoric acid such as phosphoric acid and phosphorous acid, and an organic phosphoric acid ester such as dibutyl phosphate, tributyl phosphate, trioctyl phosphate, triphenyl phosphate and triphenyl phosphite.

One of these compounds may be used alone, or two or more kinds thereof may be used in combination.

The amount of the phosphorus-based compound used is not particularly limited and, as described above, may be sufficient if it is substantially equimolar to the amount of the transesterification catalyst used. Specifically, the upper limit is preferably 5 mol, more preferably 2 mol, and the lower limit is preferably 0.8 mol, more preferably 1.0 mol, per mol of the transesterification catalyst used. If a phosphorous-based compound in an amount less than the lower limit above is used, the transesterification catalyst in a polycarbonate diol as the reaction product may be insufficiently deactivated and at the time of using the obtained polycarbonate diol, for example, as a raw material for the production of a polyurethane, an abnormal reaction such as crosslinking may be caused during polyurethane polymerization due to the insufficient deactivation of transesterification catalyst, whereas if a phosphorus-based compound in an amount exceeding the upper limit above is used, the polycarbonate diol obtained may be colored.

The deactivation of transesterification catalyst by the addition of a phosphorus-based compound may be performed at room temperature, but when a heating treatment is applied, more efficient deactivation is achieved. The temperature of the heating treatment is not particularly limited, but the upper limit is preferably 150°C, more preferably 120°C, still more preferably 100°C, and the lower limit is preferably 50°C, more preferably 60°C, still more preferably 70°C. If the heat treatment temperature is a temperature less than the lower limit above, the deactivation of transesterification catalyst takes much time and is not efficient, or the degree of deactivation may be inadequate. On the other hand, if the heating treatment temperature exceeds the upper limit above, the polycarbonate diol obtained may be colored.

The time for which the reaction with a phosphorus-based compound is performed is not particularly limited but is usually from 1 to 5 hours.

(7) Purification

After the polymerization reaction, purification may be performed for the purpose of removing, from the polycarbonate diol, an impurity having an alkyloxy group as a terminal structure, an impurity having an aryloxy group, an unreacted dihydroxy compound or carbonate compound, a byproduct monohydroxy compound or dihydroxy compound, a light boiling cyclic carbonate, a catalyst added, etc. At this time, a method of removal by distillation can be employed for the purification of a light boiling compound. The specific method of distillation includes reduced-pressure distillation, water vapor distillation, thin-film distillation, etc., and the form of distillation is not limited but, among others, thin-film distillation is effective. In addition, washing by use of water, alkaline water, acidic water, a chelating agent-dissolved solution, etc. may also be performed so as to remove water-soluble impurities. In this case, the compound to be dissolved in water can be arbitrarily selected.

The thin-film distillation conditions are not particularly limited, but the upper limit of the temperature during thin-film distillation is preferably 250°C, more preferably 210°C, and the lower limit is preferably 120°C, more preferably 150°C. When the lower limit of the temperature during thin-film distillation is the value above, a sufficient effect of removing light boiling components is obtained, and when the upper limit is the value above, the polycarbonate diol obtained after thin-film distillation can be prevented from coloration.

The upper limit of the pressure during thin-film distillation is preferably 500 Pa, more preferably 150 Pa, still more preferably 70 Pa. When the pressure during thin-film distillation is not more than the upper limit above, a sufficient effect of removing light boiling components is obtained.

The upper limit of the temperature for warm-keeping of the polycarbonate diol immediately before thin-film distillation is preferably 250°C, more preferably 150°C, and the lower limit is preferably 80°C, more preferably 120°C.

When the temperature for warm-keeping of the polycarbonate diol immediately before thin-film distillation is not less than the lower limit above, the polycarbonate diol immediately before thin-film distillation can be prevented from reduction in the fluidity. On the other hand, when the temperature is not more than the upper limit above, the polycarbonate diol obtained after thin-film distillation can be prevented from coloration.

(8) Hydroxyl Value

The lower limit of the hydroxyl value of the polycarbonate diol of the present invention produced by the production method of a polycarbonate diol of the present invention is preferably 20 mg-KOH/g, preferably 25 mg-KOH/g, more preferably 30 mg-KOH/g, still more preferably 35 mg-KOH/g, and the upper limit is 450 mg-KOH/g, preferably 230 mg-KOH/g, more preferably 150 mg-KOH/g, still more preferably 120 mg-KOH/g, yet still more preferably 75 mg-KOH/g, and most preferably 60 mg-KOH/g. If the hydroxyl value is less than the lower limit above, the viscosity is excessively high, making the handling at the time of polyurethane formation difficult, and if the hydroxyl value exceeds the upper limit above, when a polyurethane is formed, physical properties such as flexibility and low-temperature characteristics may be insufficient.

The hydroxyl value of the polycarbonate diol is specifically measured by the method described later in the paragraph of Examples.

(9) Molecular Weight Distribution (Mw/Mn)

The ratio (Mw/Mn) of the weight average molecular weight (Mw) in terms of polystyrene to the number average molecular weight (Mn) in terms of polystyrene of the polycarbonate diol of the present invention as measured by gel permeation chromatography (hereinafter, sometimes simply referred to as "GPC") is preferably from 1.5 to 3.0. The lower limit of Mw/Mn is more preferably 1.7, still more preferably 1.8, and the upper limit is more preferably 2.5, still more preferably 2.3. If Mw/Mn exceeds the upper limit above, the physical properties of a polyurethane produced using the polycarbonate diol have a tendency, for example, to become hard at low temperatures or decrease in the elongation, and if a polycarbonate diol having Mw/Mn less than the lower limit above is intended to be produced, a high-level purification operation such as removal of an oligomer may be required.

(10) Molecular Chain Terminal

The molecular chain terminal of the polycarbonate diol of the present invention produced by the production method of a polycarbonate diol of the present invention is mainly a hydroxyl group. However, in the case of a polycarbonate diol obtained by the reaction of a dihydroxy compound with a carbonate compound, a polycarbonate diol in which the molecular chain terminal is partially not a hydroxyl group may be present as an impurity. A specific example thereof is a structure where the molecular chain terminal is an alkyloxy group or an aryloxy group and many of these terminals are derived from the carbonate compound.

For example, in the case where diphenyl carbonate, dimethyl carbonate, diethyl carbonate or ethylene carbonate is used as the carbonate compound, a phenoxy group (PhO-) as an aryloxy group, a methoxy group (MeO-) as an alkyloxy group, an ethoxy group (EtO-) or a hydroxyethoxy group ($HOCH_2CH_2O$-) may remain, respectively, as a molecular chain terminal (here, Ph represents a phenyl group, Me represents a methyl group, and Et represents an ethyl group).

As for the molecular chain terminal of the polycarbonate diol of the present invention, the ratio of the total number of terminals derived from the dihydroxy compound to the total number of terminals is preferably 90 mol% or more, more preferably 95 mol% or more, still more preferably 97 mol% or more, yet still more preferably 99 mol% or more. When the ratio of the total number of terminals derived from the dihydroxy compound is not less than the lower limit above, in the case of using the polycarbonate diol as a polyurethane raw material, a polyurethane having a desired molecular weight can be easily produced and a polyurethane excellent in balance of physical properties can be obtained.

On the other hand, out of the molecular chain terminals of the polycarbonate diol of the present invention, the ratio of the number of carbonate compound-derived terminal groups to the total number of terminals is preferably 10 mol% or less, more preferably 5 mol% or less, still more preferably 3 mol% or less, yet still more preferably 1 mol% or less.

(11) Remaining Monomers

In the case where, for example, a diaryl carbonate such as diphenyl carbonate is used as the raw material carbonate compound, phenols are produced as a byproduct during the production of the polycarbonate diol. Phenols are a monofunctional compound and therefore, likely to become an inhibitory factor at the time of production of a polyurethane and moreover, a urethane bond formed by phenols is weak in its bonding force and may dissociate due to heat in the later step, etc., allowing for regeneration of an isocyanate or phenols to cause a problem. In addition, since phenols are an irritating substance as well, the amount of phenols remaining in the polycarbonate diol is preferably smaller. Specifically, the amount of phenols remaining in the polycarbonate diol is, in terms of the weight ratio to the polycarbonate diol, preferably 1,000 ppm or less, more preferably 500 ppm or less, still more preferably 300 ppm or less, yet still more preferably 100 ppm or less. In order to reduce the amount of phenols in the polycarbonate diol, it is effective to make the pressure during the polymerization reaction of polycarbonate diol be a high vacuum of 1 kPa or less in terms of absolute pressure as described above or perform the above-described thin-film distillation, etc. after the polymerization of polycarbonate diol. Even in the case of performing the above-described thin-film distillation, etc., if the amount of phenols remaining in a polycarbonate diol-containing composition after polymerization is large, it is necessary to use a large thin-film distillation apparatus for reducing the amount of phenols or repeat a phenol-decreasing step such as thin film distillation, as a result, the productivity is greatly reduced. For this reason, the amount of remaining phenol in a polycarbonate diol-containing composition after polymerization is preferably smaller, and specifically, the weight ratio relative to the polycarbonate diol is preferably 1.0 wt% or less, more preferably 0.5 wt% or less, still more preferably 0.3 wt% or less, yet still more preferably 0.1 wt% or less.

In the polycarbonate diol, a carbonate compound used as a raw material at the time of production sometimes remains. The amount of the carbonate compound remaining in the polycarbonate diol is not limited but is preferably smaller and as for the weight ratio relative to the polycarbonate diol, the upper limit is preferably 5 wt%, more preferably 3 wt%, still more preferably 1 wt%, yet still more preferably 0.1 wt%, even yet still more preferably 0.01 wt%. If the content of the carbonate compound in the polycarbonate diol is too large, the compound may inhibit the reaction at the time of polyurethane formation or reduce the physical properties. The content of the carbonate compound in the polycarbonate diol is most preferably 0 wt%.

In the polycarbonate diol, a dihydroxy compound used at the time of production sometimes remains. The amount of the dihydroxy compound remaining in the polycarbonate diol is not limited but is preferably smaller, and the weight ratio relative to the polycarbonate diol is preferably 1 wt% or less, more preferably 0.1 wt% or less, still more preferably 0.05 wt% or less. If the amount of the dihydroxy compound remaining in the polycarbonate diol is large, the molecular length of the soft segment moiety of a polyurethane formed may be insufficient, resulting in a higher elastic modulus than the desired physical properties. On the other hand, the lower limit of the amount of the dihydroxy compound remaining in the polycarbonate diol is preferably 0 wt%.

In the polycarbonate diol, a cyclic carbonate (cyclic oligomer) produced as a byproduct at the time of production is sometimes contained. For example, in the case of using 1,3-propanediol as the dihydroxy compound, 1,3-dioxan-2-one, a cyclic carbonate formed from two or more molecules thereof, etc. may be produced and contained in the polycarbonate diol. Such a compound is likely to bring about a side reaction during the polyurethane forming reaction or gives rise to turbidity and therefore, is preferably removed as much as possible by making the pressure of polymerization reaction of the polycarbonate diol be a high vacuum of 1 kPa or less in terms of absolute pressure or performing thin-film distillation, etc. after the synthesis of polycarbonate diol. The content of such a cyclic carbonate in the polycarbonate diol is not limited but is, in terms of the weight ratio relative to the polycarbonate diol, preferably 3 wt% or less, more preferably 1 wt% or less, still more preferably 0.5 wt% or less.

(12) APHA Value

The color of the polycarbonate diol of the present invention produced by the production method of a polycarbonate diol of the present invention is preferably 150 or less, more preferably 100 or less, still more preferably 80 or less, yet still more preferably 60 or less, and most preferably 40 or less, in terms of the value as expressed by the Hazen color number (in conformity with JIS K0071-1:1998) (hereinafter, referred to as "APHA value"). If the APHA value exceeds 150, the color tone of a polyurethane obtained using the polycarbonate diol as a raw material is deteriorated to reduce the commercial value or impair the thermal stability. In order to make the APHA value of the polycarbonate diol be 150 or less, it is necessary to keep the amount of sugar and/or a derivative thereof present in the transesterification reaction system at 80 ppm by weight or less relative to the amount of the dihydroxy compound and additionally, to select the kind or amount of the catalyst or additive at the time of production of a polycarbonate diol and comprehensively control the heat history, the concentration of a monohydroxy compound during polymerization as well as after the completion of polymerization, and the concentration of an unreacted monomer. It is also effective to shield light during polymerization as well as after the completion of polymerization. In addition, the setting of molecular weight of the polycarbonate diol or the selection of the dihydroxy compound species as a monomer is also important. Among others, a polycarbonate diol using, as a raw material, an aliphatic dihydroxy compound having an alcoholic hydroxyl group exhibits, when processed into a polyurethane, various excellent performances such as flexibility, water resistance and light resistance but tends to allow for conspicuous coloration due to heat history or catalyst, compared with the case using an aromatic dihydroxy compound as a raw material, and therefore, it is not easy to make the APHA value be 150 or less.
APHA is specifically measured by the method described later in the paragraph of Examples.

(13) Melt Viscosity

The melt viscosity of the polycarbonate diol of the present invention produced by the production method of a polycarbonate diol of the present invention, as measured by the method described later in the paragraph of Examples, is preferably 100 mPa•s or more, more preferably 300 mPa•s or more, still more preferably 500 mPa•s or more, and preferably 1,000,000 mPa•s or less, more preferably 10,000 mPa•s or less, still more preferably 7,000 mPa•s or less. When the melt viscosity of the polycarbonate diol is not less than the lower limit above, the polymerization degree of the polycarbonate diol is sufficient, and a urethane produced using the polycarbonate diol tends to be excellent in the flexibility or elastic recovery ratio. When the melt viscosity is not more than the upper limit above, the handling property of the obtained polycarbonate diol is advantageously enhanced, leading to no reduction in the production efficiency.

[Production of Polyurethane]

The production method of a polyurethane by the present invention is described below.
In the production method of a polyurethane of the present invention, a polycarbonate diol obtained by polymerizing an aliphatic dihydroxy compound and a carbonate compound by a transesterification reaction in the presence of a predetermined amount of sugar and/or a derivative thereof according to the above-described production method of a polycarbonate diol of the present invention is reacted with an isocyanate compound to produce a polyurethane. That is, the polycarbonate diol obtained in this way by a reaction in the presence of sugar and/or a derivative thereof contains sugar and/or a derivative thereof and in turn, the production reaction system for a polyurethane of the present invention accepts the presence of sugar and/or a derivative thereof that are contained in the polycarbonate diol and carried in. The lower limit of the abundance of sugar and/or a derivative thereof during the reaction of polyurethane formation is, as the content in the polycarbonate diol containing sugar and/or a derivative thereof, i.e., as the content of sugar and/or a derivative thereof relative to the total of sugar and/or a derivative thereof and the polycarbonate diol, preferably 0.01 ppm by weight, more preferably 0.05 ppm by weight, still more preferably 0.1 ppm by weight, yet still more preferably 0.2 ppm by weight, and most preferably 0.3 ppm by weight. The upper limit is preferably 70 ppm by weight, more preferably 50 ppm by weight, still more preferably 30 ppm by weight, yet still more preferably 10 ppm by weight.
In the present invention, for the production of a polyurethane, one of the above-described polycarbonate polyols of the present invention may be used alone, or two or more thereof may be mixed and used. A polycarbonate diol other than the polycarbonate diol of the present invention may also be used in combination, and the polycarbonate polyol of the present invention may be used as a mixture with polyester diol and/or polyether diol or may be modified and used as a copolymerized polyol.

At the time of production of a polyurethane by the present invention, a chain extender may also be used, if desired.

In any case, the lower limit of the content of sugar and/or a derivative thereof existing in the production reaction system of polyurethane due to use of the polycarbonate diol of the present invention is preferably 0.005 ppm by weight, more preferably 0.02 ppm by weight, still more preferably 0.05 ppm by weight, relative to the polyurethane produced. The upper limit is preferably 65 ppm by weight, more preferably 30 ppm by weight, still more preferably 7 ppm by weight.

In the present invention, the polycarbonate diol of the present invention may also be modified and used for the production of polyurethane. The method for modifying the polycarbonate diol includes a method of introducing an ether group by adding an epoxy compound such as ethylene oxide, propylene oxide or butylene oxide to the polycarbonate diol, and a method of introducing an ester group by reacting the polycarbonate diol with a cyclic lactone such as ε-caprolactone, a dicarboxylic acid compound such as adipic acid, succinic acid, sebacic acid or terephthalic acid, or an ester compound thereof. In the ether modification, modification with ethylene oxide, propylene oxide, etc. brings about reduction in the viscosity of the polycarbonate diol and is preferred in view of handling property, etc. In particular, when the polycarbonate diol of the present invention using 1,4-butanediol as a raw material is modified with ethylene oxide or propylene oxide, the crystallinity of the polycarbonate diol decreases, improving the low-temperature flexibility, and in the case of ethylene oxide modification, the water absorptivity or moisture permeability of a polyurethane produced using the ethylene oxide-modified polycarbonate diol increases, as a result, the performance as artificial leather/synthetic leather, etc. may be enhanced. However, if the amount of ethylene oxide or propylene oxide added is large, various physical properties such as mechanical strength, heat resistance and chemical resistance of a polyurethane produced using the modified polycarbonate diol are reduced. For this reason, the amount added to the polycarbonate diol is suitably from 5 to 50 wt%, preferably from 5 to 40 wt%, more preferably from 5 to 30 wt%. In the method of introducing an ester group, modification with ε-caprolactone brings about reduction in the viscosity of the polycarbonate diol and is preferred in view of handling property, etc. The amount of ε-caprolactone added to the polycarbonate diol is suitably from 5 to 50 wt%, preferably from 5 to 40 wt%, more preferably from 5 to 30 wt%. If the amount of ε-caprolactone added exceeds 50 wt%, the hydrolysis resistance, chemical resistance, etc. of a polyurethane produced using the modified polycarbonate diol are reduced.

(1) Isocyanate Compound

The isocyanate compound for use in the present invention includes, for example, an aromatic diisocyanate such as 2,4- or 2,6-tolylene diisocyanate (TDI), xylylene diisocyanate, 4,4'-diphenylmethane diisocyanate (MDI), para-phenylene diisocyanate, 1,5-naphthalene diisocyanate and tolidine diisocyanate; an aromatic ring-containing aliphatic diisocyanate such as $\alpha,\alpha,\alpha',\alpha'$-tetramethylxylylene diisocyanate; an aliphatic diisocyanate such as methylene diisocyanate, propylene diisocyanate, lysine diisocyanate, 2,2,4- or 2,4,4-trimethylhexamethylene diisocyanate and 1,6-hexamethylene diisocyanate; and an alicyclic diisocyanate such as 1,4-cyclohexane diisocyanate, methylcyclohexane diisocyanate (hydrogenated TDI), 1-isocyanato-3-isocyanatomethyl-3,5,5-trimethylcyclohexane (IPDI), 4,4'-dicyclohexylmethane diisocyanate and isopropylidenedicyclohexyl-4,4'-diisocyanate. One of these compounds may be used alone, or two or more thereof may be mixed and used.

The suitable isocyanate compound differs depending on the use application of the polyurethane produced and, for example, in the application requiring weather resistance, such as synthetic or artificial leather and coating material, an aliphatic diisocyanate and/or an alicyclic diisocyanate are preferably used, because yellowing by light scarcely occurs. Among others, in view of good physical properties and ease of availability, 1,6-hexamethylene diisocyanate, 1-isocyanato-3-isocyanatomethyl-3,5,5-trimethylcyclohexane and 4,4'-dicyclohexylmethane diisocyanate are preferably used. On the other hand, in the application requiring strength, such as elastic fiber, an aromatic diisocyanate having high cohesive force is preferably used, and in view of good physical properties and ease of availability, it is more preferable to use tolylene diisocyanate (TDI) and diphenylmethane diisocyanate (MDI). In addition, an isocyanate compound where part of the NCO group is modified into urethane, urea, burette, allophanate, carbodiimide, oxazolidone, amide, imide, etc. may also be used, and the polynuclear form includes compounds containing an isomer other than those described above.

The amount of such an isocyanate compound used is, usually, preferably from 0.1 to 10 equivalents, more preferably from 0.8 to 1.5 equivalents, still more preferably from 0.9 to 1.05 equivalents, per equivalent of the hydroxyl group of the polycarbonate diol and the hydroxyl group and amino group of the chain extender used, if desired.

When the amount of the isocyanate compound used is not more than the upper limit above, an undesirable reaction of an unreacted isocyanate group is prevented from occurring, and desired physical properties are easily obtained. When the amount of the isocyanate compound used is not less than the lower limit above, the molecular weight of the obtained polyurethane sufficiently grows, and desired performances can be exerted.

The isocyanate compound reacts with water contained in the raw material of polyurethane except for the isocyanate compound, such as polycarbonate diol or chain extender used, if desired, and partially disappears and therefore, an amount for making up for the loss may be added to the desired use amount of the isocyanate compound. Specifically, the polycarbonate diol, chain extender, etc. is measured for the water amount before being mixed with the isocyanate compound at the time of reaction, and an isocyanate compound having isocyanate groups corresponding to two times the substance amount of water is added to the predetermined use amount.

The mechanism by which the isocyanate group reacts with water and disappears is that an isocyanate group reacts with a water molecule to give an amine compound and the amine compound further reacts with an isocyanate group to form a urea bond, as a result, two isocyanate groups disappear for one water molecule. There is a fear that this disappearance leads to a shortage of the necessary isocyanate compound and desired physical properties are not obtained. Therefore, it is effective to add an isocyanate compound for making up for the amount appropriate to the water amount by the method described above.

(2) Chain Extender

In the present invention, a chain extender having two or more active hydrogens may be used, if desired. The chain extender is classified mainly into a compound having two or more hydroxyl groups and a compound having two or more amino groups. Of these, a short-chain polyol, specifically, a compound having two or more hydroxyl groups, is preferable for the application to polyurethane, and a polyamine compound, specifically, a compound having two or more amino groups, is preferable for the application to polyurethane urea.

In addition, when a compound having a molecular weight (number average molecular weight) of 500 or less is used in combination as the chain extender, rubber elasticity of a polyurethane elastomer is enhanced, and this is more preferred in view of physical properties.

The compound having two or more hydroxyl groups includes, for example, an aliphatic glycol such as ethylene glycol, diethylene glycol, triethylene glycol, propylene glycol, dipropylene glycol, tripropylene glycol, 1,3-propanediol, 1,2-butanediol, 1,3-butanediol, 1,4-butanediol, 2,3-butanediol, 3-methyl-1,5-pentanediol, neopentyl glycol, 2-methyl-1,3-propanediol, 2-methyl-2-propyl-1,3-propanediol, 2-butyl-2-ethyl-1,3-propanediol, 1,5-pentanediol, 1,6-hexanediol, 2-methyl-2,4-pentanediol, 2,2,4-trimethyl-1,3-pentanediol, 2-ethyl-1,3-hexanediol, 2,5-dimethyl-2,5-hexanediol, 2-butyl-2-hexyl-1,3-propanediol, 1,8-octanediol, 2-methyl-1,8-octanediol and 1,9-nonanediol; an alicyclic glycol such as bishydroxymethylcyclohexane; and an aromatic ring-containing glycol such as xylylene glycol and bishydroxyethoxybenzene.

The compound having two or more amino groups includes, for example, an aromatic diamine such as 2,4- or 2,6-tolylenediamine, xylylenediamine and 4,4'-diphenylmethanediamine; an aliphatic diamine such as ethylenediamine, 1,2-propylenediamine, 1,6-hexanediamine, 2,2-dimethyl-1,3-propanediamine, 2-methyl-1,5-pentanediamine, 1,3-diaminopentane, 2,2,4- or 2,4,4-trimethylhexanediamine, 2-butyl-2-ethyl-1,5-pentanediamine, 1,8-octanediamine, 1,9-nonanediamine and 1,10-decanediamine; and an alicyclic diamine such as 1-amino-3-aminomethyl-3,5,5-trimethylcyclohexane (IPDA), 4,4'-dicyclohexylmethanediamine (hydrogenated MDA), isopropylidenecyclohexyl-4,4'-diamine, 1,4-diaminocyclohexane and 1,3-bisaminomethylcyclohexane.

Among these, ethylene glycol, diethylene glycol, 1,3-propanediol, 1,4-butanediol, 3-methyl-1,5-pentanediol, neopentyl glycol, 2-methyl-1,3-propanediol, isophoronediamine, hexamethylenediamine, ethylenediamine, propylenediamine, 1,3-diaminopentane and 2-methyl-1,5-pentanediamine are preferred in the present invention, and in view of ease of handling or storage and excellent balance of physical properties of the obtained polyurethane, 1,4-butanediol is more preferred.

For the chain extender as well, a biomass resource-derived chain extender may also be used, and in this case, the production method thereof is the same as the production method of the above-described biomass resource-derived dihydroxy compound.

Of these chain extenders, a compound having a hydroxyl group is preferred when using an aromatic polyisocyanate as the isocyanate compound, and a compound having an amino group is preferred when using an aliphatic polyisocyanate. In addition, one of these chain extenders may be used alone, or two or more thereof may be mixed and used.

The amount of the chain extender used is not particularly limited but is, usually, preferably from 0.8 to 1.2 equivalents per equivalent of the isocyanate group or hydroxyl group remaining at the molecular terminal, etc. when a prepolymer is obtained by the reaction of an isocyanate compound and a polycarbonate diol.

When the amount of the chain extender used is not more than the upper limit above, the obtained polyurethane (or polyurethane urea) can be prevented from becoming excessively hard and not only desired properties are obtained but also the polymer is easily soluble in a solvent, making the processing easy. When the amount used is not less than the lower limit, the obtained polyurethane (or polyurethane urea) has a sufficiently increased molecular weight and is kept from becoming excessively soft and not only adequate strength and elasticity recovering performance or elasticity retaining performance are obtained but also high-temperature characteristics can be enhanced.

In the present invention, as the chain extender, a compound containing sugar and/or a derivative thereof may also be used to allow a predetermined amount of the chain extender-derived sugar and/or derivative thereof to be present in the reaction system. In this case, the content of sugar and/or a derivative thereof in the chain extender may be sufficient if it is an amount large enough to allow sugar and/or a derivative thereof, including the polycarbonate diol-derived sugar and/or derivative thereof, to be present in the above-described abundance in the reaction system, but a chain extender containing sugar and/or a derivative thereof, for example, in an amount of 0.1 to 800 ppm by weight, particularly from 0.5 to 100 ppm by weight, furthermore from 10 to 100 ppm by weight, can be preferably used. Here, the content of sugar and/or a derivative thereof is the content in the chain extender containing sugar and/or a derivative thereof, i.e., the content of sugar and/or a derivative thereof relative to the total of the sugar and/or derivative thereof and the chain extender.

(3) Chain Terminator

In the present invention, for the purpose of controlling the molecular weight of the obtained polyurethane, a chain terminator having one active hydrogen group may be used, if desired. Examples of the chain terminator include an aliphatic monohydroxy compound having a hydroxyl group, such as methanol, ethanol, propanol, butanol and hexanol, and an aliphatic monoamine having an amino group, such as morpholine, diethylamine, dibutylamine, monoethanolamine and diethanolamine. One of these compounds may be used alone, or two or more thereof may be mixed and used.

(4) Polyol Other Than Polycarbonate Diol of the Present Invention

At the time of production of the polyurethane of the present invention, the polycarbonate diol of the present invention and a polyol other than that may be used in combination, if desired. The polyol other than the polycarbonate diol of the present invention is not particularly limited as long as it is a polyol usually employed for the production of a polyurethane, and examples thereof include a polyether polyol, a polyester polyol, and a polycarbonate diol other than the polycarbonate diol of the present invention. The weight ratio of the polycarbonate diol of the present invention relative to the total weight of the polycarbonate diol of the present invention and a polyol other than that is preferably 70% or more, more preferably 90% or more. If the weight ratio of the polycarbonate diol of the present invention is small, the above-described effects owing to use of the polycarbonate diol of the present invention as a raw material of polyurethane may not be sufficiently obtained.

(5) Crosslinking Agent

In the present invention, for the purpose of increasing the heat resistance or strength of the obtained polyurethane, a crosslinking agent having three or more active hydrogen groups or isocyanate groups may be used, if desired. As the crosslinking agent, trimethylolpropane, glycerin and an isocyanate-modified product thereof, polymeric MDI, etc. can be used.

(6) Production of Polyurethane

In the present invention, a polyurethane is produced using the above-described polycarbonate diol of the present invention and an isocyanate compound and, if desired, using the chain extender, chain terminator, etc. described above.
In the present invention, the polyurethane may be produced by a reaction in a bulk manner, namely, without a solvent, or by a reaction in a solvent excellent in the solubility of polyurethane, such as aprotic polar solvent.
An example of the production method is described below, but the production method is not limited to the following method. The production method includes, for example, a one-step method and a two-step method.
The one-step method is a method of reacting a polycarbonate diol, an isocyanate compound and a chain extender at the same time.
The two-step method is a method of first reacting a polycarbonate diol and an isocyanate compound to prepare a prepolymer having an isocyanate group at both ends, and then reacting the prepolymer with a chain extender (hereinafter, sometimes referred to "isocyanate group-terminated two-step method"). The method also includes a method of preparing a prepolymer having a hydroxyl group at both ends, and then reacting the prepolymer with an isocyanate compound (hereinafter, sometimes referred to as "hydroxy group-terminated two-step method").
The isocyanate group-terminated two-step method passes through a step of previously reacting a polycarbonate diol with 1 equivalent or more of an isocyanate compound, thereby preparing a both-end isocyanate-capped intermediate corresponding to the soft segment of a polyurethane. In addition, the hydroxyl group-terminated two-step method passes through a step of previously reacting a polycarbonate diol with less than 1 equivalent of isocyanate, thereby preparing a both-end isocyanate-capped intermediate corresponding to the soft segment of a polyurethane.

The method of once preparing a prepolymer and then reacting it with a chain extender is characterized in that the molecular weight of the soft segment portion is easily adjusted and the molecular design is facilitated.

Among others, in the case where the chain extender is a diamine, the reaction rate with an isocyanate group is greatly different from that with a hydroxyl group of the polycarbonate diol and therefore, it is more preferable to carry out the polyurethane urea formation by the prepolymer method.

<One-Step Method>

The one-step method is also referred to as a one-shot method and is a method of performing the reaction by charging a polycarbonate diol, an isocyanate compound and a chain extender all together. The amount of each compound used may be the use amount described above.

In the one-shot method, a solvent may or may not be used. In the case of not using a solvent, the isocyanate compound and the polycarbonate diol, etc. may be reacted using a low-pressure foaming machine or a high-pressure foaming machine or may be reacted by stirring and mixing them by means of a high-speed rotary mixer.

In the case of using a solvent, the solvent includes, for example, ketones such as acetone, methyl ethyl ketone, methyl isobutyl ketone and cyclohexanone; ethers such as dioxane and tetrahydrofuran; hydrocarbons such as hexane and cyclohexane; aromatic hydrocarbons such as toluene and xylene; esters such as ethyl acetate and butyl acetate; alcohols such as methanol, ethanol, propyl alcohol and isopropyl alcohol; halogenated hydrocarbons such as chlorobenzene, trichlene and perchloroethene; aprotic polar solvents such as γ-butyrolactone, dimethylsulfoxide, N-methyl-2-pyrrolidone, N,N-dimethylformamide and N,N-dimethylacetamide; and a mixture of two or more thereof.

Among these organic solvents, in view of solubility, an aprotic polar solvent is preferred. Preferable specific examples of the aprotic polar solvent include methyl ethyl ketone, methyl isobutyl ketone, ethyl acetate, N,N-dimethylacetamide, N,N-dimethylformamide, N-methyl-2-pyrrolidone, and dimethylsulfoxide, with N,N-dimethylformamide and N,N-dimethylacetamide being more preferred.

In the case of the one-shot method, the lower limit of the reaction equivalent ratio of NCO/active hydrogen group (polycarbonate diol and chain extender) is, usually, preferably 0.50, more preferably 0.8, and the upper limit is, usually, preferably 1.5, and more preferably 1.2.

When the reaction equivalent ratio is 1.5 or less, it is prevented for an excess isocyanate group to cause a side reaction and produce an undesirable effect on the physical properties of the polyurethane. When the reaction equivalent ratio is 0.50 or more, the molecular weight of the obtained polyurethane can sufficiently grow, and occurrence of a problem with the strength or thermal stability can be prevented.

The reaction is preferably performed at a temperature of 0 to 100°C, but this temperature is preferably adjusted according to the amount of solvent, the reactivity of raw material used, the reaction equipment, etc. If the reaction temperature is too low, the reaction proceeds too slowly and because of low solubility of the raw material or polymerization product, the productivity is low. If the reaction temperature is too high, a side reaction or decomposition of the polyurethane disadvantageously occurs. The reaction may be performed while degassing under reduced pressure.

A catalyst, a stabilizer, etc. may also be added to the reaction system, if desired.

The catalyst includes, for example, triethylamine, tributylamine, dibutyltin dilaurate, dioctyltin dilaurate, dioctyltin dineodecanoate, stannous octylate, acetic acid, phosphoric acid, sulfuric acid, hydrochloric acid, and sulfonic acid.

The stabilizer includes, for example, 2,6-dibutyl-4-methylphenol, distearyl thiodipropionate, di-β-naphthylphenylenediamine, and tri(dinonylphenyl)phosphite.

<Two-Step Method>

The two-step method is also referred to as a prepolymer method, where an isocyanate compound and a polycarbonate diol are previously reacted preferably in a reaction equivalent ratio of 0.1 to 10.00 to produce a prepolymer and subsequently, an isocyanate compound or an active hydrogen compound component, as a chain extender, is added to the prepolymer, thereby performing a two-step reaction.

In the two-step method, a solvent may or may not be used. In the case of using a solvent, the solvent includes, for example, ketones such as acetone, methyl ethyl ketone, methyl isobutyl ketone and cyclohexanone; ethers such as dioxane and tetrahydrofuran; hydrocarbons such as hexane and cyclohexane; aromatic hydrocarbons such as toluene and xylene; esters such as ethyl acetate and butyl acetate; alcohols such as methanol, ethanol, propyl alcohol and isopropyl alcohol; halogenated hydrocarbons such as chlorobenzene, trichlene and perchloroethene; aprotic polar solvents such as γ-butyrolactone, dimethylsulfoxide, N-methyl-2-pyrrolidone, N,N-dimethylformamide and N,N-dimethylacetamide; and a mixture of two or more thereof.

In the present invention, among these organic solvents, an aprotic polar solvent is preferred in view of solubility. Preferable specific examples of the aprotic polar solvent include methyl ethyl ketone, methyl isobutyl ketone, ethyl acetate, N,N-dimethylacetamide, N,N-dimethylformamide, N-methyl-2-pyrrolidone, and dimethyl sulfoxide, with N,N-dimethylformamide and N,N-dimethylacetamide being more preferred.

In the case of synthesizing an isocyanate group-terminated or hydroxyl group-terminated prepolymer, (a) a prepolymer may be synthesized by directly reacting an isocyanate compound and a polycarbonate diol without using a solvent and used as it is, (b) a prepolymer may be synthesized by the method of (a), then dissolved in a solvent and used, or (c) a prepolymer may be synthesized by reacting an isocyanate compound and a polycarbonate diol with use of a solvent.

In the case of (a), a polyurethane is preferably obtained in the form of coexisting with a solvent by a method of, for example, dissolving a chain extender in a solvent or introducing the prepolymer and a chain extender simultaneously into a solvent, so as to allow a chain extender to act on the prepolymer.

The lower limit of the reaction equivalent ratio of NCO/active hydrogen group (polycarbonate diol) at the time of synthesis of a prepolymer is, usually, preferably 0.6, more preferably 0.8, and the upper limit is, usually, preferably 10, more preferably 5, still more preferably 3.

The amount of the chain extender used is not particularly limited, but relative to the equivalent of NCO group or OH group contained in the prepolymer, the lower limit is, usually, preferably 0.8, more preferably 0.9, and the upper limit is, usually, preferably 2, more preferably 1.2. When this ratio is 2 or less, it is prevented for an excess chain extender to cause a side reaction and produce an undesirable effect on the physical properties of the polyurethane. When the ratio is 0.8 or more, the molecular weight of the obtained polyurethane can sufficiently grow, and occurrence of a problem with the strength or thermal stability can be prevented.

A monofunctional organic amine or alcohol may also be allowed to coexist at the time of reaction. The organic amine or alcohol includes the same substances as those described for the chain terminator in (3) above.

The reaction temperature is preferably from 0 to 250°C, but this temperature is preferably adjusted according to the amount of solvent, the reactivity of raw material used, the reaction equipment, etc. If the reaction temperature is too low, the reaction proceeds too slowly and because of low solubility of the raw material or polymerization product, the productivity is low. If the reaction temperature is too high, a side reaction or decomposition of the polyurethane disadvantageously occurs. The reaction may be performed while degassing under reduced pressure.

A catalyst, a stabilizer, etc. may also be added to the reaction system, if desired.

The catalyst includes, for example, triethylamine, tributylamine, dibutyltin dilaurate, dioctyltin dilaurate, dioctyltin dineodecanoate, stannous octylate, acetic acid, phosphoric acid, sulfuric acid, hydrochloric acid, and sulfonic acid. However, in the case where the isocyanate compound is an aromatic isocyanate and/or where the chain extender is a compound having high reactivity, such as short-chain aliphatic amine, the reaction is preferably carried out without adding a catalyst.

The stabilizer includes, for example, 2,6-dibutyl-4-methylphenol, distearyl thiodipropionate, di-β-naphthylphenylenediamine, and tri(dinonylphenyl)phosphite.

In the application requiring heat resistance or strength, when a crosslinking agent is added at the time of production of the polyurethane of the present invention, the polycarbonate diol of the present invention is preferably used in a smaller amount than in the case of using a petroleum-derived polycarbonate diol that is commonly employed.

<Production of Aqueous Polyurethane Emulsion>

An aqueous polyurethane emulsion can also be produced using the polycarbonate diol of the present invention. In this case, at the time of producing a prepolymer by reacting a polycarbonate diol-containing polyol with an excess isocyanate compound, the prepolymer is preferably formed by mixing a compound having at least one hydrophilic functional group and at least two isocyanate-reactive groups and subjected to a neutralization/salt formation step of the hydrophilic functional group, an emulsification step by the addition of water, and a chain extension reaction step to produce an aqueous polyurethane emulsion.

The hydrophilic functional group in the compound having at least one hydrophilic functional group and at least two isocyanate-reactive groups used here is, for example, a carboxyl group or a sulfonic acid group and is a group neutralizable with an alkaline group. The isocyanate-reactive group is a group generally reacting with an isocyanate to form a urethane bond or a urea bond, such as hydroxyl group, primary amino group and secondary amino group, and these groups may be mixed in the same molecule.

The compound having at least one hydrophilic functional group and at least two isocyanate-reactive groups specifically includes 2,2'-dimethylolpropionic acid, 2,2-methylolbutyric acid, 2,2'-dimethylolvaleric acid, etc. The compound also includes diaminocarboxylic acids such as lysine, cystine, and 3,5-diaminocarboxylic acid. One of these compounds may be used alone, or two or more thereof may be used in combination. In the case of using such a compound in practice, the compound may be used by neutralizing it with an alkaline compound, for example, an amine such as trimethylamine, triethylamine, trin-propylamine, tributylamine and triethanolamine, sodium hydroxide, potassium hydroxide, or ammonia.

In the case of producing an aqueous polyurethane emulsion, in order to raise the dispersion performance in water, the lower limit of the use amount of the compound having at least one hydrophilic functional group and at least two isocyanate-reactive groups is preferably 1 wt%, more preferably 5 wt%, still more preferably 10 wt%, relative to the total weight of the polyol including the polycarbonate diol of the present invention. On the other hand, if the compound is added in an excessively large amount, the characteristic features of the polycarbonate diol of the present invention may not be maintained, and for this reason, the upper limit is preferably 50 wt%, more preferably 40 wt%, still more preferably 30 wt%.

In the case of producing an aqueous polyurethane emulsion, the reaction in the prepolymer process may be performed in the coexistence of a solvent such as methyl ethyl ketone, acetone and N-methyl-2-pyrrolidone, or may be performed without a solvent. In the case of using a solvent, the solvent is preferably removed by distillation after the production of an aqueous emulsion.

At the time of producing an aqueous polyurethane emulsion without a solvent by using the polycarbonate diol of the present invention as a raw material, the upper limit of the number average molecular weight as determined from the hydroxyl value of the polycarbonate diol used is preferably 5,000, more preferably 4,500, still more preferably 4,000, and the lower limit is preferably 300, more preferably 500, still more preferably 800. If the number average molecular weight as determined from the hydroxyl value of the raw material polycarbonate diol exceeds 5,000 or falls below 300, the emulsion formation may be difficult.

At the time of synthesis or storage of the aqueous polyurethane emulsion, the emulsion stability may be maintained by using, in combination, for example, an anionic surfactant typified by higher fatty acid, resin acid, acidic fatty alcohol, sulfuric acid ester, higher alkyl sulfonate, alkylaryl sulfonate, sulfonated castor oil and sulfosuccinic acid ester, a cationic surfactant such as primary amine salt, secondary amine salt, tertiary amine salt, quaternary amine salt and pyridinium salt, or a nonionic surfactant typified by a known reaction product of ethylene oxide with a long-chain aliphatic alcohol or phenols.

At the time of formation of an aqueous polyurethane emulsion, water may be mixed with an organic solvent solution of the prepolymer under mechanical high shear in the presence of an emulsifier without, if desired, applying a neutralization/salt formation step to produce the emulsion.

The thus-produced aqueous polyurethane emulsion can be used for various applications. In particular, a chemical raw material having a small environmental impact is recently demanded, and the emulsion can substitute for conventional products with an aim to use no organic solvent.

As to the specific usage of aqueous polyurethane emulsion, for example, utilization for a coating agent, an aqueous coating material, an adhesive, synthetic leather and artificial leather is suitable. In particular, the aqueous polyurethane emulsion produced using the polycarbonate diol of the present invention has excellent productivity and high mechanical properties by virtue of containing sugar and/or a derivative thereof in the polycarbonate diol and therefore, can be effectively utilized as a coating agent, etc., compared with an aqueous polyurethane emulsion using the conventional polycarbonate diol.

<Production of Urethane (Meth)acrylate-Based Oligomer>

A urethane (meth)acrylate-based oligomer can also be produced by subjecting an isocyanate compound and a hydroxyalkyl (meth)acrylate to an addition reaction using the polycarbonate diol of the present invention. In the case where a polyol as another raw material compound, a chain extender, etc. are used in combination, the urethane (meth)acrylate-based oligomer can be produced by subjecting also such another raw material compound to an addition reaction with an isocyanate compound.

At this time, the ratio of respective raw material compounds charged is substantially equal to or the same as that in the composition of the objective urethane (meth)acrylate-based oligomer.

The hydroxyalkyl (meth)acrylate used for the production of a urethane (meth)acrylate-based oligomer is a compound having one or more hydroxyl groups, one or more (meth)acryloyl groups, and a hydrocarbon group with a carbon number of 1 to 30. As for the hydroxyalkyl (meth)acrylate, only one compound may be used, or two or more compounds may be used in combination.

The hydroxyalkyl (meth)acrylate includes, for example, 2-hydroxyethyl (meth)acrylate, 2-hydroxypropyl (meth)acrylate, 4-hydroxybutyl (meth)acrylate, 6-hydroxyhexyl (meth)acrylate, cyclohexanedimethanol mono(meth)acrylate, an addition reaction product of 2-hydroxyethyl (meth)acrylate and caprolactone, an addition reaction product of 4-hyddroxybutyl (meth)acrylate and caprolactone, an addition reaction product of glycidyl ether and (meth)acrylic acid, a mono(meth)acrylate form of glycol, pentaerythritol tri(meth)acrylate, and dipentaerythritol penta(meth)acrylate.

The molecular weight of the hydroxyalkyl (meth)acrylate is preferably 40 or more, more preferably 80 or more, and in view of mechanical strength of the obtained urethane (meth)acrylate-based oligomer, is preferably 800 or less, more preferably 400 or less. In the case where the hydroxyalkyl (meth)acrylate is the above-described addition reaction product or a polymer, this molecular weight is a number average molecular weight.

Among those hydroxyalkyl (meth)acrylates above, in view of mechanical strength of the obtained urethane (meth)acrylate-based oligomer, a hydroxyalkyl (meth)acrylate having an alkylene group with a carbon number of 2 to 4 between a (meth)acryloyl group and a hydroxyl group, such as 2-hydroxyethyl (meth)acrylate, 2-hydroxypropyl (meth)acrylate and 4-hydroxybutyl (meth)acrylate, is preferred.

Usually, the amount of all isocyanate groups in the urethane (meth)acrylate-based oligomer and the amount of all functional groups reacting with the isocyanate group, such as hydroxyl group and amino group, are theoretically equimolar.

At the time of producing the urethane (meth)acrylate-based oligomer, the amount of the hydroxyalkyl (meth)acrylate used is usually 10 mol% or more, preferably 15 mol% or more, more preferably 25 mol% or more, and is usually 70 mol% or less, preferably 50 mol% or less, relative to the total use amount of the hydroxyalkyl (meth)acrylate, the polycarbonate diol of the present invention, the polyol as another raw material compound used, if desired, and the compound containing a functional group reacting with isocyanate, such as chain extender. The molecular weight of the obtained urethane (meth)acrylate-based oligomer can be controlled according to the ratio above. When the ratio of the hydroxyalkyl (meth)acrylate is large, the molecular weight of the urethane (meth)acrylate-based oligomer tends to be small, and when the ratio is small, the molecular weight tends to be large.

In producing the urethane (meth)acrylate-based oligomer, the use amount of the polycarbonate diol of the present invention is preferably 25 mol% or more, more preferably 50 mol% or more, still more preferably 70 mol% or more, relative to the total use amount of the polycarbonate diol of the present invention and another polyol. When the use amount of the polycarbonate diol of the present invention is not less than the lower limit above, a tendency to enhancement of the productivity and improvement of mechanical properties of the obtained cured product, which are the effects of the present invention, is likely to be obtained advantageously.

In addition, the use amount of the polycarbonate diol of the present invention is preferably 10 wt% or more, more preferably 30 wt% or more, still more preferably 50 wt% or more, yet still more preferably 70 wt% or more, relative to the total use amount of the polycarbonate diol of the present invention and another polyol. When the use amount of the polycarbonate diol of the present invention is not less than the lower limit above, a tendency to enhancement of the productivity and improvement of mechanical properties of the obtained cured product, which are the effects of the present invention, is likely to be obtained advantageously.

Furthermore, in the case of using a chain extender, the combined use amount of the polycarbonate diol of the present invention and another polyol is preferably 70 mol% or more, more preferably 80 mol% or more, still more preferably 90 mol% or more, yet still more preferably 95 mol% or more, relative to the total use amount of the polycarbonate diol of the present invention, another polyol and the chain extender. When the amount of the polycarbonate diol of the present invention is not less than the lower limit above, the solution stability tends to be enhanced advantageously.

At the time of production of the urethane (meth)acrylate-based oligomer, a solvent can be used for the purpose of adjusting the viscosity. One solvent may be used alone, or two or more solvents may be mixed and used. As the solvent, any known solvent may be used. Preferable solvents include toluene, xylene, ethyl acetate, butyl acetate, cyclohexanone, methyl ethyl ketone, methyl isobutyl ketone, etc. The solvent can be used usually in an amount of less than 300 parts by weight per 100 parts by weight of the solid content in the reaction system.

At the time of production of the urethane (meth)acrylate-based oligomer, the total content of the urethane (meth)acrylate-based oligomer produced and raw material compounds therefor in the reaction system is preferably 20 wt% or more, more preferably 40 wt% or more, relative to the total amount of the reaction system. The upper limit of the total content is 100 wt%. When the total content of the urethane (meth)acrylate-based oligomer and raw material compounds therefor is 20 wt% or more, the reaction rate tends to rise to advantageously enhance the production efficiency.

At the time of production of the urethane (meth)acrylate-based oligomer, an addition reaction catalyst can be used. The addition reaction catalyst includes, for example, dibutyltin laurate, dibutyltin dioctoate, dioctyltin dilaurate, dioctyltin dioctoate, and dioctyltin dineodecanoate. One addition reaction catalyst may be used alone, or two or more addition reaction catalysts may be mixed and used. Among these, in view of environmental adaptability, catalytic activity and storage stability, the addition reaction catalyst is preferably dioctyltin dilaurate or dioctyltin dineodecanoate.

The upper limit of the amount of the addition reaction catalyst used is usually 1,000 ppm, preferably 500 ppm, relative to the total content of the urethane (meth)acrylate-based oligomer produced and raw material compounds thereof in the reaction system, and the lower limit is usually 10 ppm, preferably 30 ppm.

At the time of production of the urethane (meth)acrylate-based oligomer, in the case of containing a (meth)acryloyl group in the reaction system, a polymerization inhibitor may be used in combination. The polymerization inhibitor includes, for example, phenols such as hydroquinone, methylhydroquinone, hydroquinone monoethyl ether and dibutylhydroxytoluene, amines such as phenothiazine and diphenylamine, a copper salt such as copper dibutyldithiocarbamate, a manganese salt such as manganese acetate, a nitro compound, and a nitroso compound. One polymerization inhibitor may be used alone, or two or more polymerization inhibitors may be mixed and used. Among these polymerization inhibitors, phenols are preferred.

The upper limit of the amount of the polymerization inhibitor used is usually 3,000 ppm, preferably 1,000 ppm, more preferably 500 ppm, relative to the total content of the urethane (meth)acrylate-based oligomer produced and raw material compounds thereof in the reaction system, and the lower limit is usually 50 ppm, preferably 100 ppm.

At the time of production of the urethane (meth)acrylate-based oligomer, the reaction temperature is usually 20°C or more, preferably 40°C or more, more preferably 60°C or more. When the reaction temperature is 20°C or more, the reaction rate tends to rise to advantageously enhance the production efficiency. In addition, the reaction temperature is usually 120°C or less, preferably 100°C or less. When the reaction temperature is 120°C or less, a side reaction such as allophanation reaction is less likely to occur, and this is preferred. In the case of containing a solvent in the reaction system, the reaction temperature is preferably not more than the boiling point of the solvent, and in the case of containing (meth)acrylate in the structure of solvent, from the standpoint of preventing reaction of a (meth)acryloyl group, the reaction temperature is preferably 70°C or less. The reaction time is usually on the order of 5 to 20 hours.

The number average molecular weight, in terms of polystyrene as measured by gel permeation chromatography (GPC), of the thus-obtained urethane (meth)acrylate-based oligomer is preferably 500 or more, more preferably 1,000 or more, and is preferably 10,000 or less, more preferably 5,000 or less, still more preferably 3,000 or less. When the number average molecular weight of the urethane (meth)acrylate-based oligomer is not less than the lower limit above, the cured film obtained using the composition has good three-dimensional processing suitability, and an excellent balance tends to be advantageously established between the three-dimensional processing suitability and the contamination resistance. When the number average molecular weight of the urethane (meth)acrylate-based oligomer is not more than the upper limit above, the contamination resistance of the cured film obtained using the composition is improved, and an excellent balance tends to be advantageously established between the three-dimensional processing suitability and the contamination resistance. This is presumed to result because the three-dimensional processing suitability and the contamination resistance are dependent on the distance between crosslinking points in a network structure and when the distance is long, a soft and stretchy structure is formed to provide excellent three-dimensional processing suitability, whereas when the distance is short, the network structure becomes a rigid structure to provide excellent contamination resistance.

The urethane (meth)acrylate-based oligomer may be formed into an active energy ray-curable composition by further incorporating other components, if desired. Other components include, for example, an active energy ray-reactive monomer, an active energy ray-curable oligomer, a polymerization initiator, a photosensitizer, an additive, and a solvent.

(7) Physical Properties, Etc. of Polyurethane

The polyurethane of the present invention produced by the production method of a polyurethane of the present invention preferably has the following physical properties, and this is described by taking, as an example, a polyurethane in which a polycarbonate diol produced using 1,4-butanediol as the dihydroxy compound and having a molecular weight of 2,000 as calculated from the hydroxyl value is used as a raw material, 2 equivalents of 4,4'-diphenylmethane diisocyanate (MDI) is reacted per equivalent of the polycarbonate diol in a 30 wt% solution of N,N-dimethylformamide, and the reaction product is chain-extended with 1,4-butanediol.

In the process of producing the polyurethane of the present invention, the lower limit of the weight average molecular weight (Mw) in terms of polystyrene as measured by GPC, in the reaction system at a point where the total number of moles of isocyanate groups of the isocyanate compound used as a raw material is 0.95 in molar ratio (hereinafter, sometimes referred to as NCO/OH=0.95), is preferably 80,000, more preferably 90,000, still more preferably 100,000, relative to the total number of moles of hydroxyl groups of the polyol used as a raw material, including the polycarbonate diol of the present invention, and a chain extender, and the upper limit is preferably 225,000, more preferably 220,000, still more preferably 215,000, yet still more preferably 210,000, even yet still more preferably 200,000, and most preferably 190,000.

When Mw at a point of NCO/OH=0.95 is not less than the lower limit above, the reaction time until reaching a molecular weight having sufficient strength is short, and the production efficiency is enhanced. When the molecular weight is not more than the upper limit, the molecular weight can be advantageously adjusted to the target final achievable molecular weight.

In the process of producing the polyurethane of the present invention, the lower limit of the viscosity at 25°C in the reaction system at a point of NCO/OH=0.95 is preferably 5 Pa•s, more preferably 7 Pa•s, still more preferably 9 Pa•s, and the upper limit is preferably 300 Pa•s, more preferably 250 Pa•s, still more preferably 200 Pa•s, yet still more preferably 150 Pa•s.

When the viscosity at a point of NCO/OH=0.95 is not less than the lower limit above, the reaction time until reaching a polyurethane having sufficient strength is short, and the production efficiency is enhanced. When the viscosity is not more than the upper limit, the viscosity can be advantageously adjusted to the target final viscosity.

The lower limit of the tensile strength at break of the polyurethane of the present invention measured by using a sample strip of 10 mm in width, 100 mm in length, and approximately from 50 to 100 μm in thickness under the conditions of a chuck-to-chuck distance of 50 mm, a tensile speed of 500 mm/min, a temperature of 23°C, and a relative humidity of 55% is preferably 60 MPa, more preferably 65 MPa, still more preferably 70 MPa, and the upper limit is preferably 200 MPa, more preferably 180 MPa, still more preferably 150 MPa, If the tensile strength at break is less than the lower limit above, a sufficient product strength tends to be not obtained, and if it exceeds the upper limit, the flexibility of the product may be impaired.

The lower limit of the tensile elongation at break of the polyurethane of the present invention measured by using a sample strip of 10 mm in width, 100 mm in length, and approximately from 50 to 100 $\mu$m in thickness under the conditions of a chuck-to-chuck distance of 50 mm, a tensile speed of 500 mm/min, a temperature of 23°C, and a relative humidity of 55% is preferably 350%, more preferably 400%, still more preferably 450%, and the upper limit is preferably 900%, more preferably 850%, still more preferably 800%. If the tensile elongation at break is less than the lower limit above, the handling property such as processability tends to be impaired, and if it exceeds the upper limit, a sufficient product strength tends to be not obtained.

The lower limit of the 100% modulus (the elastic modulus at 100% elongation) of the polyurethane of the present invention measured by using a sample strip of 10 mm in width, 100 mm in length, and approximately from 50 to 100 $\mu$m in thickness under the conditions of a chuck-to-chuck distance of 50 mm, a tensile speed of 500 mm/min, a temperature of 23°C, and a relative humidity of 55% is preferably 1.0 MPa, more preferably 2.0 MPa, still more preferably 3.0 MPa, and the upper limit is preferably 10 MPa, more preferably 8 MPa, still more preferably 6 MPa. If the 100% modulus is less than the lower limit above, the product strength may not be sufficient, and if it exceeds the upper limit, the flexibility may be insufficient or a handling property such as processability tends to be impaired.

Furthermore, the lower limit of the 300% modulus (the elastic modulus at 300% elongation) of the polyurethane of the present invention measured by using a sample strip of 10 mm in width, 100 mm in length, and approximately from 50 to 100 $\mu$m in thickness under the conditions of a chuck-to-chuck distance of 50 mm, a tensile speed of 500 mm/min, a temperature of 23°C, and a relative humidity of 55% is preferably 12.0 MPa, more preferably 12.5 MPa, and the upper limit is preferably 40 MPa, more preferably 30 MPa, still more preferably 20 MPa. If the 300% modulus is less than the lower limit above, the product strength may not be sufficient, and if it exceeds the upper limit, the flexibility may be inadequate or a handling property such as processability tends to be impaired.

In the case of targeting at a specific application, the polyurethane of the present invention may be a polyurethane having properties in an arbitrary broad range beyond the above-described ranges. These properties can be arbitrarily adjusted by changing the kind of raw material of the polyurethane or additive, the polymerization conditions, the molding conditions, etc. according to the intended use.

The upper limit of the sulfur atom content in the polyurethane of the present invention is preferably 50 ppm, more preferably 5 ppm, still more preferably 3 ppm, and most preferably 0.3 ppm, in terms of atom relative to the weight of the polyurethane. On the other hand, the lower limit is not particularly limited but is preferably 0.0001 ppm, more preferably 0.001 ppm, still more preferably 0.01 ppm, yet still more preferably 0.05 ppm, and most preferably 0.1 ppm.

When the sulfur atom content is 50 ppm or less, the thermal stability or hydrolysis resistance of the polyurethane can be enhanced. In addition, when the content is 0.0001 ppm or more, an excessive rise in the refining cost is prevented, and this is economically advantageous to the production of a polyurethane.

The polyurethane of the present invention is, usually, preferably a polyurethane with less coloration. The upper limit of the YI value (in conformity with JIS-K7373) of the polyurethane of the present invention is, usually, preferably 3.0, more preferably 2.9, still more preferably 2.8, yet still more preferably 2.7, as determined by measuring a polyurethane film of about 80 $\mu$m in thickness on a fluororesin sheet. On the other hand, the lower limit is not particularly limited but is, usually, preferably -20, more preferably -5, still more preferably -1.

A polyurethane having a YI value of 3.0 or less is advantageous in that no limitation is imposed on the use and application, such as film and sheet. On the other hand, a polyurethane having a YI value of -20 or more is economically advantageous, because the production process of producing the polyurethane is not cumbersome and an extremely expensive equipment investment is not necessary.

The weight average molecular weight of the polyurethane as measured by gel permeation chromatography (GPC) may vary depending on the use application but, for example, as a polyurethane polymerization solution in applications such as synthetic leather/artificial leather, polyurethane shoe sole, film, sheet, tube and moisture-permeable resin, the weight average molecular weight in terms of polystyrene is, usually, preferably from 10,000 to 1,000,000, more preferably from 50,000 to 500,000, still more preferably from 100,000 to 400,000, yet still more preferably from 100,000 to 350,000. The molecular weight distribution Mw/Mn is preferably from 1.5 to 3.5, more preferably from 1.8 to 2.5, still more preferably from 1.9 to 2.3.

When the molecular weight is 1,000,000 or less, an excessive increase in the solution viscosity can be prevented, leading to an enhanced handling property, and when the molecular weight is 10,000 or more, the obtained polyurethane can be prevented from an excessive reduction in the physical properties. When the molecular weight distribution is 1.5 or more, an excessive deterioration in the profitability of polyurethane production can be prevented as well as the elastic modulus of the obtained polyurethane is enhanced, and when the molecular weight distribution is 3.5 or less, an excessive increase in the solution viscosity can be prevented, leading to an enhanced handling property. In addition, the obtained polyurethane can be prevented from an excessive increase in the elastic modulus, and the elastic recovery is improved.

(8) Polyurethane Solution

A solution obtained by dissolving the polyurethane of the present invention in an aprotic solvent (hereinafter, sometimes referred to as "polyurethane solution") is convenient for the processing into a film, a yarn. etc. because of unlikelihood of progress of gelling, good storage stability such as little change over time of viscosity, and low thixotropy.
The aprotic solvent suitably used for the polyurethane solution of the present invention includes the above-described methyl ethyl ketone, methyl isobutyl ketone, ethyl acetate, N,N-dimethylacetamide, N,N-dimethylformamide, N-methyl-2-pyrrolidone, and dimethylsulfoxide, with N,N-dimethylformamide and N,N-dimethylacetamide being preferred.
The polyurethane content in the polyurethane solution is, usually, preferably from 1 to 99 wt%, more preferably from 5 to 90 wt%, still more preferably from 10 to 70 wt%, yet still more preferably from 15 to 50 wt%, relative to the total weight of the polyurethane solution. When the polyurethane content in the polyurethane solution is 1 wt% or more, removal of a large amount of solvent is not necessary, so that the productivity can be enhanced, and when the content is 99 wt% or less, the viscosity of the solution can be kept low, so that the operability or processability can be enhanced.
The viscosity of the polyurethane solution of the present invention is, as a solution viscosity measured by the method described later in the paragraph of Examples, preferably 100 Pa•s or more, more preferably 200 Pa•s or more, still more preferably 300 Pa•s or more. On the other hand, the viscosity is preferably 1,000 Pa•s or less, more preferably 900 Pa•s or less, still more preferably 800 Pa•s or less. When the viscosity of the polyurethane solution is not less than the lower limit above, the processing of the polyurethane solution at the time of production is facilitated as well as sufficient mechanical properties tend to be bought out, and when the viscosity is not more than the upper limit, the handling property of the polyurethane solution and in turn the productivity are advantageously enhanced.
Although not particularly specified, in the case of storing the polyurethane solution over a long period of time, the solution is preferably stored in an inert gas atmosphere such as nitrogen or argon.

(9) Additives of Polyurethane

In the polyurethane of the present invention, various additives may be added, if desired. These additives include, for example, an antioxidant such as CYANOX 1790 (produced by CYANAMID Company), IRGANOX 245, IRGANOX 1010 (both produced by Ciba Specialty Chemicals Corporation), Sumilizer GA-80 (produced by Sumitomo Chemical Co., Ltd.) and 2,6-dibutyl-4-methylphenol (BHT); a light stabilizer such as TINUVIN 622LD, TINUVIN 765 (both produced by Ciba Specialty Chemicals Corporation), SANOL LS-2626 and LS-765 (both produced by Sankyo Co., Ltd.); an ultraviolet absorber such as TINUVIN 328 and TINUVIN 234 (both produced by Ciba Specialty Chemicals Corporation); an additive and a reactive flame retardant, e.g., a silicon compound such as dimethylsiloxanepolyoxyalkylene copolymer, red phosphorus, a organophosphorus compound, phosphorus- and halogen-containing organic compounds, a bromine- or chlorine-containing organic compound, ammonium polyphosphate, aluminum hydroxide, and antimony oxide; a colorant, e.g., a pigment such as titanium dioxide, a dye, and carbon black; a hydrolysis inhibitor such as carbodiimide compound; a filler such as short glass fiber, carbon fiber, alumina, talc, graphite, melamine and white clay; a lubricant; an oil; a surfactant; and other inorganic extenders and organic solvents. In addition, water and a blowing agent such as chlorofluorocarbon alternative may also be added, and this addition is useful, among others, for polyurethane foam for shoe soles.

(10) Polyurethane Molded Article and Use

The polyurethane of the present invention and the polyurethane solution thereof can exert a variety of characteristics and can be widely used for a foam, an elastomer, a paint, a coating, a fiber, an adhesive, a floor material, a sealant, a medical material, artificial leather, synthetic leather, etc. The uses thereof are described below, but the use application of the polyurethane of the present invention and the polyurethane solution thereof is not limited to the followings by any means.

(a) Use as Casting Polyurethane Elastomer

For example, rolls such as rolling roll, papermaking roll, office equipment and pretension roll; solid tires and casters for a forklift, an automotive vehicle new tram, a carriage, a carrier, etc.; industrial products such as conveyor belt idler, guide roll, pulley, steel pipe lining, rubber screen for ore, gears, connection ring, liner, impeller for pump, cyclone cone and cyclone liner; belts for OA equipment; paper feed rolls; squeegees; cleaning blades for copying; snowplows; toothed belts; and surf rollers.

(b) Use as Thermoplastic Elastomer

For example, tubes or hoses in a pneumatic component used in the food and medical fields, a coating apparatus, an analytical instrument, a physicochemical apparatus, a metering pump, a water treatment apparatus, an industrial robot, etc.; spiral tubes and fire hoses; and belts such as round belt, V-belt and flat belt, in various transmission mechanisms, spinning machines, packaging devices, printing machines, etc.

(c) Heel tops and shoe soles of footwear; device parts such as cup ring, packing, ball joint, bushing, gear and roll; sports goods; leisure goods; a wristwatch belt; etc.

(d) As Automotive Parts

Oil stoppers, gear boxes, spacers, chassis parts, interior trims, tire chain substitutes, films such as key board film and automotive film, curl cords, cable sheaths, bellows, conveying belts, flexible containers, binders, synthetic leathers, dipping products, adhesives, etc.

(e) Use as Solvent-Based Two-Pack Coating Material

For example, wood products such as musical instrument, family Buddhist altar, furniture, decorative plywood and sports goods; and as a tar-epoxy-urethane, for automotive repair.

(f) Component of Moisture-Curable One-Pack Coating Material, Block Isocyanate-Based Solvent Coating Material, Alkyd Resin Coating Material, Urethane-Modified Synthetic Resin Coating Material, Ultraviolet-Curable Coating Material, etc.

For example, coating materials for plastic bumper, strippable paints, coating agents for magnetic tape, overprint varnishes for floor tile, floor material, paper, wood grain printed film, etc., varnishes for wood, coil coats for high processing, optical fiber protective coatings, solder resists, topcoats for metal printing, base coats for vapor deposition, and white coats for food can.

(g) As Adhesive

Shoes, footwear, magnetic tape binders, decorative paper, wood, structural members, etc.; and a component of low-temperature usable adhesives or hot-melt adhesives.

(h) As Binder

Magnetic recording mediums, inks, castings, burned bricks, grafting materials, microcapsules, granular fertilizers, granular agrochemicals, polymer cement mortars, resin mortars, rubber chip binders, reclaimed foams, glass fiber sizings, etc.

(i) As Component of Fiber Processing Agent

Shrink proofing, crease proofing, water repellent finishing, etc.

(j) As Sealant/Caulking Material

Concrete walls, induced joints, peripheries of sash, wall-type PC joints, ALC joints, board joints, sealants for composite glass, heat-insulating sash sealants, automotive sealants, etc.

(k) Use for Synthetic Leather and Artificial Leather

The polyurethane produced using the polycarbonate diol of the present invention has a characteristic feature of being very excellent in the heat resistance, hydrolysis resistance, weather resistance and strength and therefore, is suitable for the application requiring a long service life, for example, for use in synthetic leather or artificial leather employed in cars or expensive furniture.

(11) Artificial Leather/Synthetic Leather

Artificial leather or synthetic leather, which is one example of representative use applications of the polyurethane of the present invention, is described in detail below.

The artificial leather or synthetic leather has, as major constituent elements, a base cloth, an adhesive layer, and a skin layer. The skin layer is formed from a skin layer blended solution obtained by mixing the polyurethane of the present invention with other resins, an antioxidant, an ultraviolet absorber, etc. to prepare a polyurethane solution, and mixing the solution with a colorant, an organic solvent, etc. In addition, a hydrolysis inhibitor, a pigment, a dye, a flame retardant, a filler, a crosslinking agent, etc. can be added, if desired, to the polyurethane solution.

Other resins include, for example, a polyurethane other than the polyurethane of the present invention, a poly(meth)acrylic resin, a vinyl chloride-vinyl acetate-based copolymer, a vinyl chloride-vinyl propionate-based copolymer, a polyvinyl butyral-based resin, a fibrillar system-based resin, a polyester resin, an epoxy resin, a phenoxy resin, and a polyamide resin.

The crosslinking agent includes, for example, a polyisocyanate compound such as organic polyisocyanate, crude MDI, TDI adduct of trimethylolpropane, and triphenylmethane isocyanate.

The base cloth includes, for example, Tetron/rayon, a napped cotton cloth, a knitted cloth, and a nylon tricot cloth. The adhesive includes, for example, a two-pack polyurethane composed of a polyurethane, a polyisocyanate compound and a catalyst.

The polyisocyanate compound includes, for example, a TDI adduct of trimethylolpropane. The catalyst includes, for example, an amine-based or tin-based catalyst.

In order to produce synthetic leather using the polyurethane of the present invention, for example, the polyurethane of the present invention is first mixed with other resins, etc. to prepare a polyurethane solution, and the solution is then mixed with a colorant, etc. to prepare a skin layer blended solution. Next, this blended solution is coated on a release paper and dried, an adhesive is further coated thereon to form an adhesive layer, a napped cloth, etc. is laminated thereto and dried, and after aging at room temperature for a few days, the release paper is separated, whereby artificial leather/synthetic leather is obtained.

The produced artificial leather/synthetic leather can be used for automotive interior materials, furniture, clothing, shoes, bags, etc.

Examples

The present invention is described in greater detail below by referring to Examples, but the present invention is not limited to the following Examples as long as the gist of the present invention is observed.

In Examples and Comparative Examples, the methods for analyzing or evaluating physical properties, etc. of each component are as follows.

(1) Analysis and Evaluation of Polycarbonate Diol

<Quantitative Determination of Phenoxy Group Amount and Phenol Content>

Polycarbonate diol was dissolved in $CDCl_3$ and measured for 400 MHz $^1$H-NMR (AL-400, manufactured by JEOL Ltd.), a polycarbonate diol-derived functional group, a phenoxy group and a phenol are identified based on signal positions of respective components, and the number average molecular weight (Mn) and the content of each component were calculated from the integral value. The proportion of phenoxy group is determined from the ratio between an integral value for one proton portion of phenoxy group and an integral value for one proton portion of the entire terminal, and the detection limit of phenoxy group is 0.05% relative to the entire terminal. In addition, the detection limit of the phenol content is 100 ppm as the weight of phenol relative to the weight of the entire sample.

<Measurements of Hydroxyl Value and Number Average Molecular Weight in Terms of Hydroxyl Group (Mn(OHV))>

The hydroxyl value of the polycarbonate diol was measured by the method using an acetylation reagent in conformity with JIS K1557-1, and Mn(OHV) was calculated from the value according to the following formula.

$$Mn(OHV) = 56.11 \times 2 \times 1000 \div \text{hydroxyl value}$$

<Measurement of APHA Value>

The APHA value was measured by the comparison with a standard solution prepared by putting molten polycarbonate diol in a colorimetric tube, in conformity with JIS K0071-1 (1998). Color Standard Solution (1000) (1 mgPt/mL) (produced by Kishida Chemical Co., Ltd.) was used as the reagent.

<Measurement of Melt Viscosity>

Polycarbonate diol was melted by heating at 80°C and thereafter, the melt viscosity was measured at 80°C by using a E-type viscometer (DV-II+Pro, manufactured by BROOKFIELD, cone: CPE-52).

(2) Measurement of Water Amount

The analysis of water in the raw materials for the production of polyurethane was performed using the Karl Fisher's method. A water analyzer, Model CA-21, manufactured by Mitsubishi Chemical Corporation was used as the apparatus, and Aquamicron AKX and Aquamicron CXU were used as an anolyte and a catholyte, respectively.

(3) Analysis and Evaluation of Polyurethane

<Solution Viscosity>

A rotor of 3°×R14 was mounted on VISCOMETER TV-22 (manufactured by Toki Sangyo Co., Ltd.), and the solution viscosity of a solution (concentration: 30 wt%) prepared by dissolving polyurethane in N,N-dimethylformamide was measured at 25°C.

<Molecular Weight>

As for the molecular weight of polyurethane, an N,N-dimethylacetamide solution was prepared to have a polyurethane concentration of 0.14 wt% and measured for the number average molecular weight (Mn) and the weight average molecular weight (Mw), in terms of standard polystyrene, by using a GPC apparatus [manufactured by Tosoh Corporation, product name: "HLC-8220" (column: TskgelGMH-XL×2); a solution prepared by dissolving 2.6 g of lithium bromide in 1 L of dimethylacetamide is used as the eluent].

<Tensile Properties of Film>

The polyurethane solution produced was applied onto a fluororesin sheet (Fluoroplastic Tape NITOFLON 900, thickness: 0.1 mm, produced by Nitto Denko Corporation) by means of a 9.5 MIL applicator and dried at 80°C for 15 hours. The obtained polyurethane film was cut into a strip shape of 10 mm in width, 100 mm in length and from 50 to 100 $\mu$m in thickness and measured for the tensile strength at break, tensile elongation at break, and elastic modulus at 100% or 300% elongation under the conditions of a chuck-to-chuck distance of 50 mm, a tensile speed of 500 mm/min, and a temperature of 23°C (relative humidity: 55%) by using a tensile tester (Tensilon UTM-III-100, manufactured by Orientec, Co. Ltd.). From 5 to 10 points were measured per one sample, and an average value thereof was employed.

<YI Value of Film>

The polyurethane solution produced was applied onto a fluororesin sheet (Fluoroplastic Tape NITOFLON 900, thickness: 0.1 mm, produced by Nitto Denko Corporation) by means of a 9.5 MIL applicator and dried at 80°C for 15 hours. The obtained polyurethane film having a thickness of 75 to 84 $\mu$m in the state of being held on the fluororesin sheet was set on a colorimeter (Color Meter ZE2000, manufactured by Nippon Denshoku Industries Co., Ltd.) with the polyurethane film facing the light source side and measured for the YI value (in conformity with JIS K7373) by placing a standard white board on the fluororesin sheet side.

[Production and Evaluation of Polycarbonate Diol]

<Example 1>

Into a 5-L glass-made separable flask equipped with a stirrer, a distillation trap and a pressure adjusting device, 1,4-butanediol (14BD, produced by Mitsubishi Chemical Corporation) containing 1 ppm of D-(+)-glucose: 1,247.2 g, diphenyl carbonate: 2,752.8 g, and an aqueous magnesium acetate tetrahydrate solution: 7.1 mL (concentration: 8.4 g/L, magnesium acetate tetrahydrate: 59 mg) were charged, followed by purging with nitrogen gas. The contents were dissolved by raising the internal temperature to 160°C under stirring. After reducing the pressure to 24 kPa over 2 minutes, the reaction was performed for 90 minutes while removing phenol outside the system. The reaction was continued by reducing the pressure to 9.3 kPa over 90 minutes and further to 0.7 kPa over 30 minutes. Thereafter, the reaction was performed for 90 minutes while removing phenol and unreacted dihydroxy compound outside the system by raising the temperature to 170°C, to obtain a polycarbonate diol-containing composition. The properties of the obtained polycarbonate diol-containing composition and the evaluation results of physical properties are shown in Table 1.

<Examples 2 to 6>

Polycarbonate diol-containing compositions were obtained in the same manner as in Example 1 except for using 14BD containing D-(+)-glucose in the amount shown in Table 1. The properties of each of the obtained polycarbonate diol-containing compositions and the evaluation results of physical properties are shown in Table 1.

<Examples 7 and 8>

Polycarbonate diol-containing compositions were obtained in the same manner as in Example 1 except for using 14BD containing gluconolactone in the amount shown in Table 1 in place of D-(+)-glucose. The properties of each of the obtained polycarbonate diol-containing compositions and the evaluation results of physical properties are shown in Table 1.

<Comparative Examples 1 and 2>

Polycarbonate diol-containing compositions were obtained by conducting the reaction by the same method as in Example 1 except that the raw material 14BD was changed to 14BD containing D-(+)-glucose in the amount shown in Table 1. The properties of each of the obtained polycarbonate diol-containing compositions and the evaluation results of physical properties are shown in Table 1. With respect to the polycarbonate diol obtained in Comparative Example 2, the objective molecular weight was not obtained as well as the terminal phenoxy group amount was high, and therefore, subsequent distillation, polyurethane formation and measurement of physical properties could not be conducted.

<Comparative Example 3>

A polycarbonate diol-containing composition was obtained by conducting the reaction by the same method as in Example 1 except that the raw material 14BD was changed to 14BD containing 100 ppm of gluconolactone in place of D-(+)-glucose. The properties of the obtained polycarbonate diol-containing composition and the evaluation results of physical properties are shown in Table 1.

<Comparative Example 4>

A polycarbonate diol-containing composition was obtained by conducting the reaction by the same method as in Example 1 except that the raw material 14BD was changed to 14BD containing neither sugar nor a sugar derivative. The properties of the obtained polycarbonate diol-containing composition and the evaluation results of physical properties are shown in Table 1.

<Comparative Example 5>

A polycarbonate diol-containing composition was obtained by conducting the reaction by the same method as in Example 1 except that the raw material 14BD was changed to 14BD containing 10 ppm of pentaerythritol-tetrakis[3-(3,5-di-tert-butyl-4-hydroxyphenyl)propionate] (produced by BASF Japan, trade name: IRGANOX 1010) in place of D-(+)-glucose. The properties of the obtained polycarbonate diol-containing composition and the evaluation results of physical properties are shown in Table 1.

[Table 1]

| | | Example 1 | Example 2 | Example 3 | Example 4 | Example 5 | Example 6 | Example 7 |
|---|---|---|---|---|---|---|---|---|
| Kind of sugar or sugar derivative | | glucose | glucose | glucose | glucose | glucose | glucose | gluconolactone |
| Glucose content in 14BD (ppm) | | 1 | 5 | 10 | 30 | 50 | 70 | 10 |
| Polycarbonate diol | Number average molecular weight (Mn) | 1850 | 1870 | 1923 | 1790 | 1750 | 1850 | 1940 |
| | Phenoxy group amount per molecule | below detection limit | below detection limit | below detection limit | below detection limit | below detection limit | below detection limit | below detection limit |
| | Outer appearance | white solid | white solid | white solid | white solid | white solid | pale yellow solid | pale yellow solid |
| | APHA | 25 | 25 | 40 | 65 | 65 | 150 | 80 |
| | Phenol content (wt%) | 0.045 | 0.04 | 0.088 | 0.033 | 0.042 | 0.018 | 0.027 |
| | | Example 8 | Comparative Example 1 | Comparative Example 2 | Comparative Example 3 | Comparative Example 4 | Comparative Example 5 | |
| Kind of sugar or sugar derivative | | gluconolactone | glucose | glucose | gluconolactone | - | IRGANOX 1010 | |
| Glucose content in 14BD (ppm) | | 50 | 100 | 1000 | 100 | 0 | 10 | |
| Polycarbonate diol | Number average molecular weight (Mn) | 1810 | 1824 | 1293 | 1790 | 1905 | 2000 | |
| | Phenoxy group amount per molecule | below detection limit | below detection limit | 0.90 | below detection limit | below detection limit | below detection limit | |
| | Outer appearance | white solid | pale yellow solid | yellow solid | yellow solid | white solid | white solid | |
| | APHA | 35 | 150 | >250 | 200 | 30 | 20 | |
| | Phenol content (wt%) | 0.031 | 0.1790 | 1.216 | 0.052 | 0.078 | 0.011 | |

[Distillation Purification and Evaluation of Polycarbonate Diol]

<Examples 1 to 8, Comparative Examples 1 and 3 to 5>

Each of the polycarbonate diol-containing compositions obtained in Examples 1 to 8 and Comparative Examples 1 and 3 to 5 was fed to a thin-film distillation apparatus at a flow rate of 20 g/min and subjected to thin-film distillation (temperature: 210°C, pressure: from 53 to 67 Pa). As the thin-film distillation apparatus, a molecular distillation apparatus, Special Model MS-300 manufactured by Sibata Scientific Technology Ltd., equipped with an internal capacitor having a diameter of 50 mm, a height of 200 mm and an area of 0.0314 m$^2$ and a jacket, was used. The properties of the polycarbonate diol obtained by thin-film distillation and the evaluation results of physical properties are shown in Table 2.

[Table 2]

|  |  | Example 1 | Example 2 | Example 3 | Example 4 | Example 5 | Example 6 |
|---|---|---|---|---|---|---|---|
| Kind of sugar or sugar derivative |  | glucose | glucose | glucose | glucose | glucose | glucose |
| Glucose content in 14BD (ppm) |  | 1 | 5 | 10 | 30 | 50 | 70 |
| Polycarbonate diol | Hydroxy value (mg-KOH/g) | 54.4 | 55.1 | 56.0 | 56.7 | 57.2 | 55.4 |
|  | Mn(OHV) | 2063 | 2037 | 2002 | 1978 | 1962 | 2025 |
|  | Phenoxy group amount per molecule | below detection limit | below detection limit | below detection limit | below detection limit | below detection limit | below detection limit |
|  | Melt viscosity (80°C) (mPa•s) | 3470 | 3620 | 3670 | 3080 | 2930 | 3380 |
|  | APHA | 25 | 25 | 35 | 70 | 80 | 100 |
|  | Phenol content (ppm) | below detection limit | below detection limit | below detection limit | below detection limit | below detection limit | below detection limit |
|  |  | Example 7 | Example 8 | Comparative Example 1 | Comparative Example 3 | Comparative Example 4 | Comparative Example 5 |
| Kind of sugar or sugar derivative |  | gluconolactone | gluconolactone | glucose | gluconolactone | - | IRGANOX 1010 |
| Glucose content in 14BD (ppm) |  | 10 | 50 | 100 | 100 | 0 | 10 |
| Polycarbonate diol | Hydroxy value (mg-KOH/g) | 51.8 | 56.6 | 56.2 | 56.7 | 52.1 | 51.5 |
|  | Mn(OHV) | 2167 | 1984 | 1995 | 1979 | 2154 | 2178 |
|  | Phenoxy group amount per molecule | below detection limit | below detection limit | below detection limit | below detection limit | below detection limit | below detection limit |
|  | Melt viscosity (80°C) (mPa•s) | 4300 | 3280 | 3480 | 3000 | 4160 | 4250 |
|  | APHA | 30 | 150 | 150 | 200 | 50 | 20 |
|  | Phenol content (ppm) | below detection limit | below detection limit | 130 | below detection limit | below detection limit | below detection limit |

[Production and Evaluation of Polyurethane]

<Example 9>

Into a separable flask equipped with a stirring blade and mounted with a thermocouple, 72.69 g of the polycarbonate diol after thin-film distillation obtained in Example 1 and previously heated to 80°C, 3.18 g of 1,4-butanediol (produced by Mitsubishi Chemical Corporation), 218.2 g of dehydrated N,N-dimethylformamide (hereinafter DMF, produced by Wako Pure Chemical Industries, Ltd.), and 16.8 mg of an urethanation catalyst (NEOSTANN U-830, produced by Nitto Kasei Co., Ltd.) were charged. This separable flask was immersed in an oil bath set at 55°C, and the contents were stirred at 60 rpm for about 1 hour while warming the inside of the separable flak in a nitrogen atmosphere. After the polycarbonate diol was dissolved in the solvent, 17.45 g of MDI (produced by Nippon Polyurethane Industry Co., Ltd.) was added. When the internal temperature rise due to heat of reaction was settled and a temperature drop was started, the temperature setting of the oil bath was raised to 70°C, followed by stirring for 1 hour. At this time, the ratio (hereinafter, NCO/OH molar ratio) of the total substance amount of MDI to a value obtained by subtracting the total substance amount of contained water from the total substance amount of polycarbonate diol and 1,4-butanediol was 0.95, the viscosity was 9.14 Pa•s, and the weight average molecular weight was 106,000. Thereafter, 0.78 g of MDI was additionally added to obtain a polyurethane solution having an NCO/OH molar ratio of 0.99, a viscosity of more than 416.7 Pa•s, and a weight average molecular weight of 318,000. The properties of this polyurethane and the evaluation results of physical properties are shown in Table 3.

<Examples 10 to 16 and Comparative Examples 6 to 9>

Polyurethane solutions were obtained in the same manner as in Example 9 by employing the charged amounts of raw materials shown in Table 3 except for using the polycarbonate diol after thin-film distillation obtained in Examples 2 to 8 and Comparative Examples 1 and 3 to 5. The properties of this polyurethane and the evaluation results of physical properties are shown in Table 3.

<Comparative Example 10>

71.3 mg of a 1.2 wt% DMF solution of D-(+)-glucose was added to 101.54 g of the polycarbonate diol obtained in Comparative Example 4 and uniformly mixed. At this time, the concentration of D-(+)-glucose was 10.6 ppm by weight relative to the total weight of D-(+)-glucose and the raw material 1,4-butanediol as a constituent unit of the polycarbonate diol. Using the obtained polycarbonate diol, a polyurethane solution was obtained in the same manner as in Example 9 by employing the charged amounts of raw materials shown in Table 3. The properties of this polyurethane and the evaluation results of physical properties are shown in Table 3.

[Table 3]

| | | | Example 9 | Example 10 | Example 11 | Example 12 | Example 13 |
|---|---|---|---|---|---|---|---|
| Example No. of polycarbonate diol used | | | Example 1 | Example 2 | Example 3 | Example 4 | Example 5 |
| Kind of sugar or sugar derivative | | | glucose | glucose | glucose | glucose | glucose |
| Content of sugar or sugar derivative in 14BD for production of polycarbonate diol (ppm) | | | 1 | 5 | 10 | 30 | 50 |
| APHA of polycarbonate diol | | | 25 | 25 | 35 | 70 | 80 |
| Raw material composition of polyurethane | Polycarbonate diol (g) | | 72.69 | 72.23 | 69.77 | 82.7 | 74.51 |
| | 1,4-Butanediol (g) | | 3.18 | 3.19 | 3.15 | 3.76 | 3.43 |
| | MDI (NCO/OH=0.95 in molar ratio) (g) | | 17.45 | 17.69 | 17.79 | 20.67 | 18.54 |
| | Additionally added MDI (g) | | 0.78 | 0.27 | 0.5 | 0.65 | 0.85 |
| | Urethanation catalyst (mg) | | 16.8 | 17.4 | 18 | 17.9 | 16.7 |
| | DMF (g) | | 218.2 | 217.5 | 210.8 | 250.5 | 226.2 |
| Viscosity and molecular weight of polyurethane solution | At molar ratio NCO/OH=0.95 | Viscosity (Pa•s/25°C) | 9.14 | 63.5 | 33.1 | 19.7 | 5.04 |
| | | Molecular weight (GPC-Mn) | 54,000 | 87,000 | 71,000 | 66,000 | 46,000 |
| | | Molecular weight (GPC-Mw) | 106,000 | 168,000 | 148,000 | 125,000 | 87,000 |
| | Final molar ratio NCO/OH | | 0.99 | 0.96 | 0.98 | 0.98 | 0.99 |
| | At final molar ratio NCO/OH | Viscosity (Pa•s/25°C) | >416.7 | >416.7 | >416.7 | >416.7 | >416.7 |
| | | Molecular weight (GPC-Mn) | 147,000 | 131,000 | 137,000 | 129,000 | 127,000 |
| | | Molecular weight (GPC-Mw) | 318,000 | 275,000 | 280,000 | 289,000 | 275,000 |

|  |  |  | Example 9 | Example 10 | Example 11 | Example 12 | Example 13 |
|---|---|---|---|---|---|---|---|
| Physical properties of polyurethane film | Elastic modulus (MPa) | At 100% elongation | 3.3 | 3.3 | 3.5 | 3.7 | 3.3 |
|  |  | At 300% elongation | 13.6 | 15.5 | 14.5 | 16.9 | 13.1 |
|  | Tensile strength at break (MPa) | | 96.0 | 94.5 | 71.8 | 101.4 | 93.2 |
|  | Tensile elongation at break (%) | | 507 | 490 | 468 | 499 | 498 |
|  | YI Value | | 2.46 | 2.67 | 2.58 | 2.67 | 2.46 |

|  |  | Example 14 | Example 15 | Example 16 | Comparative Example 6 |
|---|---|---|---|---|---|
| Example No. of polycarbonate diol used | | Example 6 | Example 7 | Example 8 | Comparative Example 1 |
| Kind of sugar or sugar derivative | | glucose | gluconolactone | gluconolactone | glucose |
| Content of sugar or sugar derivative in 14BD for production of polycarbonate diol (ppm) | | 70 | 10 | 50 | 100 |
| APHA of polycarbonate diol | | 100 | 30 | 150 | 150 |
| Raw material composition of polyurethane | Polycarbonate diol (g) | 72.25 | 69.84 | 70.22 | 69.37 |
|  | 1,4-Butanediol (g) | 3.21 | 2.90 | 3.19 | 3.13 |
|  | MDI (NCO/OH=0.95 in molar ratio) (g) | 17.97 | 16.07 | 17.42 | 18.55 |
|  | Additionally added MDI (g) | 0.13 | 0.38 | 0.62 | - |
|  | Urethanation catalyst (mg) | 18.7 | 16.7 | 16.1 | 18.8 |
|  | DMF (g) | 217.8 | 208 | 212.7 | 209.6 |

EP 3 029 086 B1

(continued)

| | | | Example 14 | Example 15 | Example 16 | Comparative Example 6 | |
|---|---|---|---|---|---|---|---|
| Viscosity and molecular weight of polyurethane solution | At molar ratio NCO/OH=0.95 | Viscosity (Pa•s/25°C) | 214.0 | 27.2 | 13.92 | >416.7 | |
| | | Molecular weight (GPC-Mn) | 108,000 | 73,000 | 63,000 | 139,000 | |
| | | Molecular weight (GPC-Mw) | 214,000 | 134,000 | 116,000 | 292,000 | |
| | Final molar ratio NCO/OH | | 0.96 | 0.97 | 0.99 | 0.95 | |
| | At final molar ratio NCO/OH | Viscosity (Pa•s/25°C} | >416.7 | >416.7 | >416.7 | >416.7 | |
| | | Molecular weight (GPC-Mn) | 134,000 | 129,000 | 144,000 | 139,000 | |
| | | Molecular weight (GPC-Mw) | 281,000 | 266,000 | 302,000 | 292,000 | |
| Physical properties of polyurethane film | Elastic modulus (MPa) | At 100% elongation | 3.3 | 3.0 | 3.6 | 3.5 | |
| | | At 300% elongation | 12.9 | 12.9 | 15.7 | 15.7 | |
| | Tensile strength at break (MPa) | | 93.2 | 94.8 | 107.5 | 44.7 | |
| | Tensile elongation at break (%) | | 487 | 513 | 500 | 398 | |
| | YI Value | | 2.50 | 1.06 | 1.61 | 3.31 | |
| | | | Comparative Example 7 | Comparative Example 8 | | Comparative Example 9 | Comparative Example 10 |
| Example No. of polycarbonate diol used | | | Comparative Example 3 | Comparative Example 4 | | Comparative Example 5 | Comparative Example 4 |
| Kind of sugar or sugar derivative | | | gluconolactone | - | | IRGANOX 1010 | glucose added later (10.6 ppm relative to raw material BD) |

(continued)

| | | | Comparative Example 7 | Comparative Example 8 | Comparative Example 9 | Comparative Example 10 |
|---|---|---|---|---|---|---|
| Content of sugar or sugar derivative in 14BD for production of polycarbonate diol (ppm) | | | 100 | 0 | 10 | 0 |
| APHA of polycarbonate diol | | | 200 | 50 | 20 | 50 |
| Raw material composition of polyurethane | Polycarbonate diol (g) | | 75.94 | 70.09 | 72.89 | 101.54 |
| | 1,4-Butanediol (g) | | 3.45 | 2.91 | 3.03 | 4.55 |
| | MDI (NCO/OH=0.95 in molar ratio) (g) | | 18.86 | 15.92 | 16.94 | 25.14 |
| | Additionally added MDI (g) | | 0.61 | 0.79 | 0.12 | 0.70 |
| | Urethanation catalyst (mg) | | 16.9 | 15.5 | 17.3 | 19.8 |
| | DMF (g) | | 230.1 | 205.9 | 216.3 | 306.0 |
| Viscosity and molecular weight of polyurethane solution | At molar ratio NCO/OH=0.95 | Viscosity (Pa•s/25°C) | 19.97 | 3.52 | 199.9 | 20.9 |
| | | Molecular weight (GPC-Mn) | 68,000 | 42,000 | 111,000 | 64,000 |
| | | Molecular weight (GPC-Mw) | 126,000 | 76,000 | 226,000 | 129,000 |
| | Final molar ratio NCO/OH | | 0.98 | 1.00 | 0.96 | 0.98 |
| | At final molar ratio NCO/OH | Viscosity (Pa•s/25°C) | >416.7 | 27.4 | >416.7 | >416.7 |
| | | Molecular weight (GPC-Mn) | 135,000 | 88,000 | 133,000 | 145,000 |
| | | Molecular weight (GPC-Mw) | 270,000 | 161,000 | 295,000 | 304,000 |

| | | | Comparative Example 7 | Comparative Example 8 | Comparative Example 9 | Comparative Example 10 |
|---|---|---|---|---|---|---|
| Physical properties of polyurethane film | Elastic modulus (MPa) | At 100% elongation | 3.5 | 3.1 | 2.9 | 4.1 |
| | | At 300% elongation | 15.5 | 12.0 | 13.4 | 15.9 |
| | Tensile strength at break (MPa) | | 43.0 | 56.0 | 86.5 | 74.5 |
| | Tensile elongation at break (%) | | 392 | 508 | 491 | 441 |
| | YI Value | | 4.07 | 2.56 | 3.07 | 4.98 |

In Table 3, it is seen from the results of Examples 9 to 16 and Comparative Examples 6 and 7 that when sugar or a sugar derivative is incorporated in excess of 80 ppm by weight into the production reaction system of polycarbonate diol, the reaction rate of the obtained polyurethane tends to be too high and the strength at break is low as well as the coloration is significant. It is also seen from the results of Examples 9 to 16 and Comparative Example 8 that when sugar or a sugar derivative is not present in the production reaction system of polycarbonate diol, the reaction rate of the obtained polyurethane is low and the strength at break is small. Furthermore, it is seen from the results of Example 11 and Comparative Example 9 that the effects of the present invention are not obtained by use of pentaerythritoltetrakis[3-(3,5-di-tert-butyl-4-hydroxyphenyl)propionate] as a kind of known sugar derivative. In addition, it is seen from the results of Example 11 and Comparative Example 10 that when the sugar is added after the production of polycarbonate diol, the polyurethane is significantly colored as compared with the method of allowing sugar to be previously present in the production of polycarbonate diol.

Hence, when a polycarbonate diol obtained by the production method of the present invention is used, the reaction rate at the time of producing a polyurethane by a reaction with an isocyanate compound can be enhanced as well as a molecular weight in a given range most suitable for the enhancement of productivity can be obtained and not only the obtained polyurethane is uncolored but also the tensile strength can be improved. The polyurethane produced is desirable particularly for use in synthetic/artificial leather, paint/coating, and elastic fiber.

**Claims**

1. A production method of a polycarbonate diol, comprising:

   a step of polymerizing an aliphatic dihydroxy compound and a carbonate compound by a transesterification reaction in a presence of sugar and/or a derivative thereof to obtain a polycarbonate diol,
   wherein a content of the sugar and/or derivative thereof is from 0.1 to 80 ppm by weight relative to a total of the sugar and/or derivative thereof and the dihydroxy compound;
   wherein the sugar derivative is selected from deoxyribose, fucose, fuculose, rhamnose, quinovose, paratose, sorbitol, mannitol, xylitol, gluconolactone, glucuronic acid, levoglucosan, 4-deoxy-3-hexulose, hydroxymethylfurfural, furfural, 2-hydroxy-3-oxobutanal, erythose, acetol, glycoaldehyde, 3-methylcyclopentane-1,2-dione, 4-hydroxy-2-pentenoic acid lactone, levulinic acid, 2-acetylfuran and hydroquinone.

2. The production method of a polycarbonate diol according to claim 1,
   wherein in advance of the step of obtaining a polycarbonate diol, the method comprises a step of adjusting the amount of the sugar and/or derivative thereof in the dihydroxy compound containing the sugar and/or derivative thereof to 0.1 to 80 ppm by weight relative to a total of the sugar and/or derivative thereof and the dihydroxy compound.

3. The production method of a polycarbonate diol according to claim 1 or 2,
   wherein the dihydroxy compound contains 1,4-butanediol.

4. The production method of a polycarbonate diol according to any one of claims 1 to 3,
   wherein a number average molecular weight of the polycarbonate diol is from 500 to 5,000.

5. A polycarbonate diol, which is produced by the production method of a polycarbonate diol according to any one of claims 1 to 4.

6. A production method of a polyurethane, comprising:

   a step of reacting a polycarbonate diol and an isocyanate compound to obtain a polyurethane,
   wherein in advance of the step of obtaining a polyurethane, the polycarbonate diol is produced by the method of claim 1.

7. The production method of a polyurethane according to claim 6,
   wherein in addition to the polycarbonate diol and the isocyanate compound, a chain extender is further reacted to obtain a polyurethane.

8. The production method of a polyurethane according to claim 7,
   wherein the chain extender contains the sugar and/or derivative thereof.

9. The production method of a polyurethane according to claim 7 or 8,
   wherein the chain extender contains 1,4-butanediol.

10. The production method of a polyurethane according to any one of claims 6 to 9,
    wherein the sugar and/or derivative thereof is a carbonyl compound containing two or more oxygen atoms.

11. The production method of a polyurethane according to any one of claims 6 to 10,
    wherein the polyurethane is a thermoplastic polyurethane.

12. A polyurethane, which is produced by the production method of a polyurethane according to any one of claims 6 to 11.

13. Use of the polyurethane according to claim 12 for synthetic leather or artificial leather.

14. Use of the polyurethane according to claim 12 for a coating material or coating.


**Patentansprüche**

1. Ein Verfahren zur Herstellung eines Polycarbonatdiols, umfassend:

   einen Schritt des Polymerisierens einer aliphatischen Dihydroxyverbindung und einer Carbonatverbindung durch eine Umesterungsreaktion in Gegenwart von Zucker und/oder einem Derivat davon, um ein Polycarbonatdiol zu erhalten,
   wobei ein Gehalt des Zuckers und/oder des Derivats davon von 0,1 bis 80 Gew.-ppm, bezogen auf eine Gesamtheit des Zuckers und/oder des Derivats davon und der Dihydroxyverbindung, beträgt;
   wobei das Zuckerderivat ausgewählt ist aus Desoxyribose, Fucose, Fuculose, Rhamnose, Chinovose, Paratose, Sorbitol, Mannitol, Xylit, Gluconolacton, Glucuronsäure, Levoglucosan, 4-Desoxy-3-hexulose, Hydroxymethylfurfural, Furfural, 2-Hydroxy-3-oxobutanal, Erythose, Acetol, Glycoaldehyd, 3-Methylcyclopentan-1,2-dion, 4-Hydroxy-2-pentensäurelacton, Lävulinsäure, 2-Acetylfuran und Hydrochinon.

2. Das Verfahren zur Herstellung eines Polycarbonatdiols gemäß Anspruch 1,
   wobei vor dem Schritt des Erhaltens eines Polycarbonatdiols das Verfahren einen Schritt des Einstellens der Menge des Zuckers und/oder des Derivats davon in der Dihydroxyverbindung, welche den Zucker und/oder das Derivat davon enthält, auf 0,1 bis 80 Gew.-ppm, bezogen auf eine Gesamtheit des Zuckers und/oder des Derivats davon und der Dihydroxyverbindung, umfasst.

3. Das Verfahren zur Herstellung eines Polycarbonatdiols gemäß Anspruch 1 oder 2,
   wobei die Dihydroxyverbindung 1,4-Butandiol enthält.

4. Das Verfahren zur Herstellung eines Polycarbonatdiols gemäß einem der Ansprüche 1 bis 3,
   wobei ein Zahlenmittel des Molekulargewichts des Polycarbonatdiols 500 bis 5000 beträgt.

5. Ein Polycarbonatdiol, welches durch das Verfahren zur Herstellung eines Polycarbonatdiols gemäß einem der Ansprüche 1 bis 4 hergestellt ist.

6. Ein Verfahren zur Herstellung eines Polyurethans, umfassend:

   einen Schritt des Umsetzens eines Polycarbonatdiols und einer Isocyanatverbindung, um ein Polyurethan zu erhalten,
   wobei vor dem Schritt des Erhaltens eines Polyurethans, das Polycarbonatdiol durch das Verfahren gemäß Anspruch 1 hergestellt wird.

7. Das Verfahren zur Herstellung eines Polyurethans gemäß Anspruch 6,
   wobei zusätzlich zu dem Polycarbonatdiol und der Isocyanatverbindung weiter ein Kettenverlängerer umgesetzt wird, um ein Polyurethan zu erhalten.

8. Das Verfahren zur Herstellung eines Polyurethans gemäß Anspruch 7,
   wobei der Kettenverlängerer den Zucker und/oder das Derivat davon enthält.

**9.** Das Verfahren zur Herstellung eines Polyurethans gemäß Anspruch 7 oder 8,
wobei der Kettenverlängerer 1,4-Butandiol enthält.

**10.** Das Verfahren zur Herstellung eines Polyurethans gemäß einem der Ansprüche 6 bis 9,
wobei der Zucker und/oder das Derivat davon eine Carbonylverbindung ist, welche zwei oder mehr Sauerstoffatome
enthält.

**11.** Das Verfahren zur Herstellung eines Polyurethans gemäß einem der Ansprüche 6 bis 10,
wobei das Polyurethan ein thermoplastisches Polyurethan ist.

**12.** Ein Polyurethan, welches durch das Verfahren zur Herstellung eines Polyurethans gemäß einem der Ansprüche 6
bis 11 hergestellt wird.

**13.** Verwendung des Polyurethans gemäß Anspruch 12 für ein synthetisches Leder oder Kunstleder.

**14.** Verwendung des Polyurethans gemäß Anspruch 12 für ein Beschichtungsmaterial oder eine Beschichtung.

**Revendications**

**1.** Méthode de production d'un polycarbonate diol, comprenant :

une étape de polymérisation d'un composé dihydroxy aliphatique et d'un composé carbonate par une réaction
de trans-estérification en présence de sucre et/ou d'un dérivé de celui-ci pour obtenir un polycarbonate diol,
dans laquelle la teneur en le sucre et/ou dérivé de celui-ci est de 0,1 à 80 ppm en poids par rapport au total du
sucre et/ou dérivé de celui-ci et du composé dihydroxy ;
dans laquelle le dérivé de sucre est choisi parmi le désoxyribose, le fucose, le fuculose, le rhamnose, le quinovose, le paratose, le sorbitol, le mannitol, le xylitol, la gluconolactone, l'acide glucuronique, le lévoglucosane,
le 4-désoxy-3-hexulose, l'hydroxyméthylfurfural, le furfural, le 2-hydroxy-3-oxobutanal, l'érythose, l'acétol, le
glycoaldéhyde, la 3-méthylcyclopentane-1,2-dione, la lactone d'acide 4-hydroxy-2-penténoïque, l'acide lévulinique, le 2-acétylfurane et l'hydroquinone.

**2.** Méthode de production d'un polycarbonate diol selon la revendication 1, dans laquelle, antérieurement à l'étape
d'obtention d'un polycarbonate diol, la méthode comprend une étape d'ajustement de la quantité du sucre et/ou
dérivé de celui-ci dans le composé dihydroxy contenant le sucre et/ou dérivé de celui-ci à 0,1 à 80 ppm en poids
par rapport au total du sucre et/ou dérivé de celui-ci et du composé dihydroxy.

**3.** Méthode de production d'un polycarbonate diol selon la revendication 1 ou 2, dans laquelle le composé dihydroxy
contient du 1,4-butanediol.

**4.** Méthode de production d'un polycarbonate diol selon l'une quelconque des revendications 1 à 3, dans laquelle la
masse moléculaire moyenne en nombre du polycarbonate diol est de 500 à 5 000.

**5.** Polycarbonate diol qui est produit par la méthode de production d'un polycarbonate diol selon l'une quelconque des
revendications 1 à 4.

**6.** Méthode de production d'un polyuréthane, comprenant :

une étape de réaction d'un polycarbonate diol et d'un composé isocyanate pour obtenir un polyuréthane,
dans laquelle, antérieurement à l'étape d'obtention d'un polyuréthane, le polycarbonate diol est produit par la
méthode de la revendication 1.

**7.** Méthode de production d'un polyuréthane selon la revendication 6, dans laquelle, en plus du polycarbonate diol et
du composé isocyanate, un agent d'allongement de chaîne est en outre mis à réagir pour obtenir un polyuréthane.

**8.** Méthode de production d'un polyuréthane selon la revendication 7, dans laquelle l'agent d'allongement de chaîne
contient le sucre et/ou dérivé de celui-ci.

9.  Méthode de production d'un polyuréthane selon la revendication 7 ou 8, dans laquelle l'agent d'allongement de chaîne contient du 1,4-butanediol.

10. Méthode de production d'un polyuréthane selon l'une quelconque des revendications 6 à 9, dans laquelle le sucre et/ou dérivé de celui-ci est un composé carbonyle contenant deux atomes d'oxygène ou plus.

11. Méthode de production d'un polyuréthane selon l'une quelconque des revendications 6 à 10, dans laquelle le polyuréthane est un polyuréthane thermoplastique.

12. Polyuréthane qui est produit par la méthode de production d'un polyuréthane selon l'une quelconque des revendications 6 à 11.

13. Utilisation du polyuréthane selon la revendication 12 pour un cuir synthétique ou un cuir artificiel.

14. Utilisation du polyuréthane selon la revendication 12 pour un revêtement ou un matériau de revêtement.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011225863 A
- JP 2000001646 A
- JP 2009191223 A
- JP 2005048141 A
- EP 2060595 A1
- EP 2559718 A1

**Non-patent literature cited in the description**

- Polyurethane no Kiso to Oyo (Basis and Application of Polyurethane). CMC Shuppan, November 2006, 96